(19) Europäisches Patentamt
European Patent Office
Office européen des brevets

(11) EP 2 226 668 B1

(12) **EUROPEAN PATENT SPECIFICATION**

(45) Date of publication and mention
of the grant of the patent:
**23.05.2012 Bulletin 2012/21**

(51) Int Cl.:
**G02B 15/20** *(2006.01)*      **G02B 13/18** *(2006.01)*

(21) Application number: **10166198.1**

(22) Date of filing: **27.03.2003**

(54) **Zoom lens, and electronic imaging system using the same**

Zoomobjektiv und elektronisches Abbildungssystem damit

Objectif de zoom et système d'imagerie électronique l'utilisant

(84) Designated Contracting States:
**DE FR GB SE**

(30) Priority: **09.04.2002 JP 2002106378**
**02.08.2002 JP 2002225619**

(43) Date of publication of application:
**08.09.2010 Bulletin 2010/36**

(62) Document number(s) of the earlier application(s) in
accordance with Art. 76 EPC:
**03715538.9 / 1 494 054**

(73) Proprietor: **Olympus Corporation**
**Tokyo 151-0072 (JP)**

(72) Inventors:
• **Mihara, Shinichi**
**Tokyo 192-0023 (JP)**
• **Nozawa, Toshihide**
**Tokyo 192-0023 (JP)**

(74) Representative: **Tiesmeyer, Johannes et al**
**Weickmann & Weickmann**
**Patentanwälte**
**Postfach 86 08 20**
**81635 München (DE)**

(56) References cited:
**EP-A- 0 601 337      EP-A- 0 773 460**
**JP-A- 8 248 318      JP-A- 2000 131 610**

**Description**

ART FIELD

The present invention relates generally to a zoom lens and an electronic imaging system using the same, and more particularly to an electronic imaging system such as a video camera or a digital camera, the depth dimension of which is diminished by providing some contrivances to an optical system portion such as a zoom lens.

BACKGROUND ART

In recent years, digital cameras (electronic cameras) have received attention as the coming generation of cameras, an alternative to silver-halide 35 mm-film (135 format) cameras. Currently available digital cameras have been broken down into some categories in a wide range from the high-end type for commercial use to the portable low-end type.

In view of the category of the portable low-end type in particular, the primary object of the present invention is to provide the technology for implementing video or digital cameras whose depth dimensions are reduced while high image quality is ensured, and which are easy to handle.

The gravest bottleneck in diminishing the depth dimensions of cameras is the thickness of an optical system, especially a zoom lens system from the surface located nearest to its object side to an image pickup plane.

Recent technologies for slimming down cameras rely primarily on a collapsible lens mount that allows the optical system to be taken out of a camera body for phototaking an received therein for carrying. Typical examples of an optical system that can be effectively slimmed down while relying on the collapsible lens mount are disclosed in JP-A's 11-194274, 11-287953 and 2000-9997. Each publication discloses an optical system comprising, in order from its object side, a first lens group having negative refracting power and a second lens group having positive refracting power, wherein both lens groups move during zooming. In view of ease of operation, however, the collapsible lens mount is not preferable because of some time taken to draw an optical system out of it, and in view of waterproof and dustproof purposes, the location of a movable lens group nearest to the object side of the optical system is not desired.

Document EP-A2-0773460 relates to an image pick up lens system for a video camera and in particular discloses a zoom lens, comprising, in order from an object side thereof, a lens group A that comprises a negative lens and a reflecting optical element for bending an optical path and remains fixed during zooming, a lens group B that moves in only one direction during zooming from a wide-angle end to a telephoto end of the zoom lens, and an aperture stop.

SUMMARY OF THE INVENTION

In view of such problems with the prior art as described above, an object of the invention is to provide a zoom lens having improved optical specifications such as high zoom ratios, wide angles of view, small F-numbers and reduced aberrations, which enables a camera to be immediately placed in operation with no startup time unlike a collapsible lens mount and is preferable for waterproof and dustproof purposes and in which an optical path through the optical system can be easily bent by a reflecting optical element such as a mirror to extremely reduce the depth dimension of the camera, and an electronic imaging system that incorporates the same.

According to the invention, there is provided a zoom lens, comprising, in order from its object side, a lens group A that comprises a negative lens and a reflecting optical element for bending an optical path and remains fixed during zooming, a lens group B that moves in only one direction upon zooming from a wide-angle end to a telephoto end of the zoom lens, and an aperture stop that stays invariable in position during zooming, with satisfaction of the following condition:

$$0.45 < \log \gamma_B / \log \gamma < 0.85 \qquad \ldots (31)$$

where $\gamma = f_T / f_W$, and $\gamma_B$ is the ratio of the magnification of the lens group B at the telephoto end/the magnification of the lens group B at the wide-angle end, provided that $f_W$ and $f_T$ is the focal lengths of the zoom lens at the wide-angle end and the telephoto end; respectively. The zoom lens comprises a lens group located on an imange side of the zoom lens with respect to said aperture stop, wherein said lens group moves in only one direction during zooming from the wide angle end to the telephoto end.

The advantages of, and the requirements for, the zoom lens constructed according to the invention are now explained.

To accomplish the aforesaid object, the present invention employs a zoom lens comprising a lens group A that comprises a negative lens and a reflecting optical element for bending an optical path and remains fixed during zooming, a lens group B that moves in one direction alone upon zooming from a wide-angle end to a telephoto end, and an aperture stop that stays invariable in position during zooming.

Thus, if the reflecting optical element for bending an optical path is located in the lens group A positioned nearest to the object side of the zoom lens and the lens group A having a bending function is designed to remain fixed during zooming for the purpose of avoiding mechanical complexities, it is then possible to slim down a camera in its depth direction. To obtain a camera whose depth dimension is minimized, care must be taken to prevent a lens barrel from becoming thick in a lens diameter direction on an image side of the zoom lens with respect to the position where the optical path is bent. For instance, as a stop mechanism (often including a shutter mechanism) is moved simultaneously with zooming, a light quantity control mechanism is also moved together, with the result that the lens barrel becomes thick in the diametrical direction due to the need of ensuring moving space.

In the invention, therefore, the position of a stop mechanism is designed to stay invariable during zooming.

However, it should be noted that when the aperture stop is fixed on an object side of the zoom lens with respect to the lens group that moves in one direction alone during zooming to make a great contribution to zooming, the amount of F-number changes unacceptably throughout the zoom lens from the wide-angle end to the telephoto end, posing a problem. On the other hand, as the amount of movement of the lens group B becomes large, the entrance pupil becomes too deep to bend the optical path or ensure telecentricity on the exit side. In other words, there is no option but to control the degree of magnification change of the lens group from the wide-angle end to the telephoto end within the range defined by the following condition (31).

$$0.45 < \log \gamma_B / \log \gamma < 0.85 \qquad \ldots (31)$$

Here $\gamma$ is $f_T/f_W$ where $f_W$ and $f_T$ are the focal lengths of the zoom lens at the wide-angle end and the telephoto end, respectively, and $\gamma_B$ is the magnification of the lens group B at the telephoto end/the magnification of the lens group B at the wide-angle end.

As the upper limit of 0.85 to condition (31) is exceeded, the entrance pupil becomes deep, rendering it difficult to bend the optical path or achieve telecentricity on the exit side. As the lower limit of 0.45 is not reached, any desired zoom ratio cannot be obtained. When a zoom ratio deficit is made up for at the lens group located after the aperture stop, the amount of F-number changes becomes large throughout the zoom lens from the wide-angle end to the telephoto end, with an increasing amount of such a deficit. It is noted that given a small deficit, the amount of F-number changes is so small that a lens group that moves in one direction alone (or contributes to zooming) can be located on an image side of the zoom lens with respect to the aperture stop.

More preferably,

$$0.5 < \log \gamma_B / \log \gamma < 0.8 \qquad \ldots (31)'$$

Most preferably,

$$0.55 < \log \gamma_B / \log \gamma < 0.77 \qquad \ldots (31)''$$

In this connection, it is understood that when the lens group A has negative refracting power, the refracting power of the lens group B is positive, and when the lens group A has positive refracting power, the refracting power of the lens group B is negative. In the latter case, on an image side of the zoom lens with respect to the aperture stop there are provided a lens group C of positive refracting power and a lens group D of positive refracting power in order along the optical path through the zoom lens. Upon zooming from the wide-angle end to the telephoto end, the lens group D moves only toward the image side, thereby compensating for the zoom ratio deficit. In addition, the lens group B on the object side and the lens group C on the image side with respect to the aperture stop have refracting powers of opposite signs.

Often in return for space ensured by bending of the optical path, the entrance pupil becomes deep or it is difficult to secure the zoom ratio. Whenever possible, it is thus preferable that the reflecting optical element for bending the optical path is composed of a prism block that satisfies the following medium condition:

$$1.55 < n_{pri} < 1.97 \qquad \ldots (32)$$

where $n_{pri}$ is the d-line refractive index of a prism used as the reflecting optical element for bending the optical path.

Falling short of the lower limit of 1.55 to condition (32) causes an object-side optical element inclusive of a prism to tend to become bulky, and is unfavorable for correction of aberrations as well. In addition, the composite magnification of the lens groups subsequent to the lens group B becomes low with result that the amount of movement of the lens group B increases or to have high zoom ratios becomes difficult. A prism material exceeding the upper limit of 1.97 costs much.

More preferably,

$$1.65 < n_{pri} < 1.95 \qquad \ldots (32)'$$

Most preferably,

$$1.75 < n_{pri} < 1.93 \qquad \ldots (32)''$$

Further, it is desired that the lens group A be made up of a subgroup A1 comprising a negative meniscus lens convex on its object side, the reflecting optical element for bending an optical path, and a subgroup A2 comprising at least a positive lens.

For correction of off-axis aberrations such as chromatic aberrations and distortion, it is desired that the subgroup A2 consists of, in order from its object side, a negative lens and a positive lens, two lenses in all, and satisfies the following condition.

$$0.5 < d/L < 1.2 \qquad \ldots (33)$$

Here d is an air-based length of the light beam-entrance surface to the light beam-exit surface of the prism block as measured along the optical axis of the zoom lens, and L is the diagonal length of an effective image pickup area (of substantially rectangular shape) of an image pickup device.

Exceeding the upper limit of 1.2 to condition (33) causes an object-side optical element inclusive of a prism to tend to become bulky, and is unfavorable for correction of aberrations as well. In addition, the composite magnification of the lens groups subsequent to the lens group B becomes low with result that the amount of movement of the lens group B increases or to have high zoom ratios becomes difficult. As the lower limit of 0.5 is not reached, light beams contributing to image formation at the periphery of an image do not satisfactorily arrive at the image plane or ghosts are likely to occur. As long as this condition is satisfied, it is acceptable to provide surface mirrors of an air medium before and after reflection.

When the optical path is bent in the long and short side directions of an effective screen, it is more preferable to satisfy the following conditions (33-1) and (33-2), respectively.

$$0.75 < d/L < 1.1 \qquad \ldots (33-1)$$

$$0.55 < d/L < 0.9 \qquad \ldots (33-2)$$

Most preferably,

$$0.8<d/L<1.0 \qquad \text{...} \quad (33-1)'$$

$$0.6<d/L<0.8 \qquad \text{...} \quad (33-2)'$$

Preferably, the reflecting optical element for bending the optical path should be composed of a prism of a medium having a high refractive index, because that is favorable for size reductions of the object-side optical element including the prism and correction of aberrations.

The zoom lens of the invention is characterized in that the lens group located nearest to its object side remains fixed during zooming, and the stop can be fixed in position; however, it is mostly important that the lens group located nearest to the object side of the zoom lens have negative refracting power, and satisfy condition (31).

When the lens group A nearest to the object side along the optical path has negative refracting power, the refracting power of the lens group B is positive. In that case, too, it is preferable to satisfy condition (31). To reduce the amount of movement of each lens as much as possible thereby making optical length short, it is preferable to carry out zooming at or near where the magnification of the combined system comprising the lens group B and subsequent lens groups is 1. In view of correction of aberrations, the smaller the absolute value of magnification, the better. It is thus preferable to satisfy the following condition at the telephoto end.

$$0.75<-\beta_{Rt}<1.5 \qquad \text{...} \quad (34)$$

Here $\beta_{Rt}$ is the composite magnification of the lens group B and subsequent lens groups at the telephoto end (in a state in focus at an infinite-distance object point).

Any deviation from the upper limit of 1.5 and the lower limit of 0.75 to condition (34) causes the amount of a relative spacing change between the respective lens groups to become large, with the result that total optical length is likely to become long.

More preferably,

$$0.8<-\beta_{Rt}<1.3 \qquad \text{...} \quad (34)'$$

Most preferably,

$$0.85<-\beta_{Rt}<1.15 \qquad \text{...} \quad (34)''$$

Further, it is desired that on an image side of the zoom lens with respect to the aperture stop there be provided a lens group C of negative refracting power and a lens group D of positive refracting power in order along the optical axis of the zoom lens, wherein at least one lens group moves in one direction alone upon zooming from the wide-angle end to the telephoto end of the zoom lens, thereby compensating for a zoom ratio.

Furthermore, the lens group B located on the object side and the lens group C located on the image side with respect to the aperture stop moves in opposite directions during zooming because their refracting powers have opposite signs. In this connection, it is preferable to satisfy the following condition (35) with respect to the ratio of $M_2$ to $M_3$ where $M_2$ and $M_3$ are the amounts of movement of the lens groups B and C during zooming from the wide-angle end to the telephoto end in a state in focus at an infinite-distance object point, respectively.

$$-1.0<M_3/M_2<-0.3 \qquad \text{...} \quad (35)$$

As the upper limit of -0.3 to condition (35) is exceeded, the entrance pupil becomes deep, posing problems about whether or not the optical path can be bent or about telecentricity on the exit side. As the lower limit of - 1.0 is not reached, there is an increase in the amount of F-number changes throughout the zoom lens from the wide-angle end to the telephoto end.

More preferably,

$$-0.9 < M_3/M_2 < -0.4 \qquad \dots (35)'$$

Most preferably,

$$-0.85 < M_3/M_2 < -0.5 \qquad \dots (35)''$$

Preferably, focusing should be carried out with any one of the lens groups on the image side with respect to the aperture stop.

Preferably, the zoom lens should also satisfy the following condition (36) with respect to the ratio of M3 and M4 that are the amounts of movements of the lens groups C and D during zooming from the wide-angle end to the telephoto end in a state in focus at an infinite-distance object point.

$$0.3 < M_4/M_3 < 0.9 \qquad \dots (36)$$

As the upper limit of 0.9 to condition (36) is exceeded, it is difficult to obtain any desired zoom ratio, and as the lower limit of 0.3 is not reached, it is difficult to secure moving space for focusing.

More preferably,

$$0.4 < M_4/M_3 < 0.8 \qquad \dots (36)'$$

Most preferably,

$$0.5 < M_4/M_3 < 0.7 \qquad \dots (36)''$$

Preferably, the lens group A should comprise a subgroup A1 composed of a negative meniscus lens convex on its object side, an optical path-bending reflecting optical element and a subgroup A2 comprising at least a positive lens, as already described. It is particularly preferable that the subgroup A1 is composed of only one lens and aberrations such as chromatic aberrations are corrected at the subgroup A2. For correction of off-axis aberrations such as chromatic aberrations and distortion, the subgroup A2 of the lens group A should preferably be composed of two lenses or a positive lens and a negative lens in order from its object side and satisfy the following condition:

$$-0.3 < L/f_{12} < 0 \qquad \dots (37)$$

where $f_{12}$ is the focal length of the subgroup A2 in the lens group A.

As the upper limit of 0 to condition (37) is exceeded, the composite magnification of the lens group B and subsequent lens groups becomes low with the consequence that the amount of movement of the lens group B increases or it is difficult to secure high zoom ratios. Falling short of the lower limit of -0.3 causes an object-side optical element inclusive of the prism to tend to become bulky, and is unfavorable for correction of aberrations as well.

More preferably,

$$-0.2 < L/f_{12} < 0 \qquad \ldots (37)'$$

Most preferably,

$$-0.1 < L/f_{12} < 0 \qquad \ldots (37)''$$

The reflecting optical element used for bending the optical path in the invention requires a certain or longer length, and so the entrance pupil tends to become deep with an increased moving space, because the focal length of the lens group B and subsequent lens groups must be increased for the purpose of ensuring magnification. Since both are contrary to each other, it is preferable to divide the negative refracting power of the lens group A into two parts that are then distributed before and after the reflecting optical element for bending the optical path. Preferably in that case, the following condition should be satisfied:

$$0.5 < (R_{11F} + R_{11R}) / (R_{11F} - R_{11R}) < 4.5 \qquad \ldots (38)$$

$$0 < f_{11}/f_{12} < 0.8 \qquad \ldots (39)$$

where $R_{11F}$ and $P_{11R}$ are the axial radii of curvature of the object-side and image-side surfaces of the negative lens in the subgroup A1 of the lens group A, respectively, and $f_{11}$ and $f_{12}$ are the focal lengths of the subgroups A1 and A2 of the lens group A, respectively.

Condition (38) defines the shape factor of the negative lens in the subgroup A1. As the upper limit of 4.5 is exceeded, that negative lens is apt to interference with the reflecting optical element for bending the optical path. To counteract this, the depth dimension must be increased. As the lower limit of 0.5 is not reached, correction of aberrations such as distortion becomes difficult.

Condition (39) defines the focal length ratio between the subgroups A1 and A2. As the upper limit of 0.8 is exceeded, the entrance pupil tends to become deep, and as the lower limit of 0 is not reached, the focal length of the lens group B and subsequent lens groups must be increased to ensure magnification, leading often to an increase in the moving space.

More preferable, the following conditions (38)' and/or (39)' should be satisfied.

$$0.8 < (R_{11F} + R_{11R}) / (R_{11F} - R_{11R}) < 3.5 \qquad \ldots (38)'$$

$$0 < f_{11}/f_{12} < 0.5 \qquad \ldots (39)'$$

Even more preferably, the following conditions (38)'' and/or (39))' should be satisfied.

$$1.0 < (R_{11F} + R_{11R}) / (R_{11F} - R_{11R}) < 2.5 \qquad \ldots (38)''$$

$$0 < f_{11}/f_{12} < 0.2 \qquad \ldots (39)'($$

Most preferably, both conditions (38)'' and (39)'' should be satisfied.
Whatever the zoom lens type may be, it is acceptable to configure the reflecting surface in a surface form other than the planar surface form, thereby achieving a proper paraxial refracting power profile. It is more preferable to use a control system whose reflecting surface can be freely varied, e.g., a variable-shape mirror with a controllable shape, thereby making correction for fluctuations of focal position or aberrations with zooming or performing focusing or zooming.

Apart from this, it is acceptable to use as the reflecting optical element a prism with a planoconcave lens cemented to its planar surface or configure an effective ray transmitting or reflecting surface of the prism with a curved surface. In view of the balance of the level of correction of distortion against the target size of the electronic imaging system, it is also acceptable to add a positive lens of weak power to the site of the zoom lens nearest to the object side. In this case, the subgroup A2 in the lens group A may be dispensed with. It is further acceptable that while the subgroup A1 in the lens group A is fixed during zooming, the subgroup A2 may be movable because it is designed to move with relative ease. In this case, it is desired that the subgroup A2 move in a convex locus toward the image side during zooming.

For size reductions of a lens system, it is important to reduce the number of lenses and make each lens element thin. Otherwise, correction of Seidel aberrations and chromatic aberrations becomes difficult for lack of the degree of flexibility in correction of them. For correction of Seidel aberrations, especially fluctuations of the aberrations with zooming or off-axis residual aberrations all over the zooming area, it is effective to introduce aspheric surfaces in all lens groups having positive refracting power. It is particularly preferable to introduce an aspheric surface in the positive lens element. For correction of chromatic aberrations, especially longitudinal chromatic aberration and chromatic aberration of magnification all over the zooming area, it is desirable to permit all lens groups of positive refracting power to comprise a cemented lens component. In a sense of reducing the number of lenses, too, it is desirable to permit all the lens groups of positive refracting power to consist of a cemented lens component alone. In the present disclosure, the term "lens component" refers to either a single lens or a cemented lens provided that a lens coming in contact with air only on its object and image sides along the optical path of the optical system is regarded as one unit.

Thus, the present invention provides means for reducing the thickness of the zoom lens portion while satisfactory image-formation capability is maintained.

Next, how and why the thickness of filters is reduced is now explained. In an electronic imaging system, an infrared absorption filter having a certain thickness is usually inserted between an image pickup device and the object side of a zoom lens, so that the incidence of infrared light on the image pickup plane is prevented. Here consider the case where this filter is replaced by a coating devoid of thickness. In addition to the fact that the system becomes thin as a matter of course, there are spillover effects. When a near-infrared sharp cut coat having a transmittance ($\tau_{600}$) of at least 80% at 600 nm and a transmittance ($\tau_{700}$) of up to 8% at 700 nm is introduced between the image pickup device in the rear of the zoom lens system and the object side of the system, the transmittance at a near-infrared area of 700 nm or longer is relatively lower and the transmittance on the red side is relatively higher as compared with those of the absorption type, so that the tendency of bluish purple to turn into magenta - a defect of a CCD or other solid-state image pickup device having a complementary colors filter - is diminished by gain control and there can be obtained color reproduction comparable to that by a CCD or other solid-state image pickup device having a primary colors filter. In addition, it is possible to improve on color reproduction of, to say nothing of primary colors and complementary colors, objects having strong reflectivity in the near-infrared range, like plants or the human skin.

Thus, it is preferable to satisfy the following conditions (22) and (23):

$$\tau_{600}/\tau_{550} \geqq 0.8 \qquad \ldots (22)$$

$$\tau_{700}/\tau_{550} \leqq 0.08 \qquad \ldots (23)$$

where $\tau_{550}$ is the transmittance at 550 nm wavelength.

More preferably, the following conditions (22)' and/or (23)' should be satisfied:

$$\tau_{600}/\tau_{550} \geqq 0.85 \qquad \ldots (22)'$$

$$\tau_{700}/\tau_{550} \leqq 0.05 \qquad \ldots (23)'$$

Even more preferably, the following conditions (22)" or (23)" should be satisfied:

$$\tau_{600}/\tau_{550} \geqq 0.9 \qquad \dots \quad (22)''$$

$$\tau_{700}/\tau_{550} \leqq 0.03 \qquad \dots \quad (23)''$$

Most preferably, both conditions (28)" and (29)" should be satisfied.

Another defect of the CCD or other solid-state image pickup device is that the sensitivity to the wavelength of 550 nm in the near ultraviolet range is considerably higher than that of the human eye. This, too, makes noticeable chromatic blurring at the edges of an image due to chromatic aberrations in the near-ultraviolet range. Such color blurring is fatal to a compact optical system. Accordingly, if an absorber or reflector is inserted on the optical path, which is designed such that the ratio of the transmittance ($\tau_{400}$) at 400 nm wavelength to that ($\tau_{550}$) at 550 nm wavelength is less than 0.08 and the ratio of the transmittance ($\tau_{440}$) at 440 nm wavelength to that ($\tau_{550}$) at 550 nm wavelength is greater than 0.4, it is then possible to considerably reduce noises such as chromatic blurring while the wavelength range necessary for color reproduction (satisfactory color reproduction) is kept intact.

It is thus preferable to satisfy the following conditions (24) and (25):

$$\tau_{400}/\tau_{550} \leqq 0.08 \qquad \dots \quad (24)$$

$$\tau_{440}/\tau_{550} \geqq 0.4 \qquad \dots \quad (25)$$

More preferably, the following conditions (24)' and/or (25)' should be satisfied.

$$\tau_{400}/\tau_{550} \leqq 0.06 \qquad \dots \quad (24)'$$

$$\tau_{440}/\tau_{550} \geqq 0.5 \qquad \dots \quad (25)'$$

Even more preferably, the following condition (24)" or (25)" should be satisfied.

$$\tau_{400}/\tau_{550} \leqq 0.04 \qquad \dots \quad (24)''$$

$$\tau_{440}/\tau_{550} \geqq 0.6 \qquad \dots \quad (25)''$$

Most preferably, both condition (24)" and (25)" should be satisfied.

It is noted that these filters should preferably be located between the image-formation optical system and the image pickup device.

On the other hand, a complementary colors filter is higher in substantial sensitivity and more favorable in resolution than a primary colors filter-inserted CCD due to its high transmitted light energy, and provides a great merit when used in combination with a small-size CCD.

To shorten and slim down the optical system, the optical low-pass filter that is another filter, too, should preferably be thinned as much as possible. In general, an optical low-pass filter harnesses a double-refraction action that a uniaxial crystal like berg crystal has. However, when the optical low-pass filter includes a quartz optical low-pass filter or filters in which the angles of the crystal axes with respect to the optical axis of the zoom lens are in the range of 35° to 55° and the crystal axes are in varying directions upon projected onto the image plane, the filter having the largest thickness along the optical axis of the zoom lens among them should preferably satisfy the following condition (26) with respect to its thickness $t_{LPF}$ (mm).

$$0.08 < t_{LPF}/a < 0.16 \quad (\text{at } a < 4 \ \mu m)$$

$$0.075 < t_{LPF}/a < 0.15 \quad (\text{at } a < 3 \ \mu m) \qquad \ldots (26)$$

Here $t_{LPF}$ (mm) is the thickness of the optical low-pass filter that is thickest along the optical axis of the zoom lens with the angle of one crystal axis with respect to the optical axis being in the range of 35° to 55°, and a is the horizontal pixel pitch (in $\mu$m) of the image pickup device.

Referring to a certain optical low-pass filter or an optical low-pass filter having the largest thickness among optical low-pass filters, its thickness is set in such a way that contrast becomes theoretically zero at the Nyquist threshold wavelength, i.e., at approximately a/5.88 (mm). A thicker optical low-pass filter may be effective for prevention of swindle signals such as moiré fringes, but makes it impossible to take full advantages of the resolving power that the electronic image pickup device has, while a thinner filter renders full removal of swindle signals like moiré fringes impossible. However, swindle signals like moiré fringes have close correlations with the image-formation capability of a taking lens like a zoom lens; high image-formation capability renders swindle signals like moiré fringes likely to occur. Accordingly, when the image-formation capability is high, the optical low-pass filter should preferably be somewhat thicker whereas when it is low, the optical low-pass filter should preferably be somewhat thinner.

As the pixel pitch becomes small, on the other hand, the contrast of frequency components greater than the Nyquist threshold decreases due to the influence of diffraction by the image-formation lens system and, hence, swindle signals like moiré fringes are reduced. Thus, it is preferable to reduce the thickness of the optical low-pass filter by a few % or a few tens % from a/5.88 (mm) because a rather improved contrast is obtainable at a spatial frequency lower than the frequency corresponding to the Nyquist threshold.

More preferably,

$$0.075 < t_{LPF}/a < 0.15 \quad (\text{at } a < 4 \ \mu m)$$

$$0.07 < t_{LPF}/a < 0.14 \quad (\text{at } a < 3 \ \mu m) \qquad \ldots (26)'$$

Most preferably,

$$0.07 < t_{LPF}/a < 0.14 \quad (\text{at } a < 4 \ \mu m)$$

$$0.065 < t_{LPF}/a < 0.13 \quad (\text{at } a < 3 \ \mu m) \qquad \ldots (26)''$$

If an optical low-pass filter is too thin at a<4 $\mu$m, it is then difficult to process. Thus, it is permissible to impart some thickness to the optical low-pass filter or make high the spatial frequency (cutoff frequency) where contrast reduces down to zero even when the upper limit to conditions (26), (26)' and (26)" is exceeded. In other words, it is permissible to regulate the angle of the crystal axis of the optical low-pass filter with respect to the optical axis of the zoom lens to within the range of 15° to 35° or 55° to 75°. In some cases, it is also permissible to dispense with the optical low-pass filter. In that angle range, the quantity of separation of incident light to an ordinary ray and an extraordinary ray is smaller than that around 45°, and that separation does not occur at 0° or 90° (at 90°, however, there is a phase difference because of a velocity difference between both rays - the quarter-wave principle).

As already described, as the pixel pitch becomes small, it is difficult to increase the F-number because the image-formation capability deteriorates under the influence of diffraction at a high spatial frequency that compensates for such a small pixel pitch. It is thus acceptable to use two types of aperture stops for a camera, i.e., a full-aperture stop where there is a considerable deterioration due to geometric aberrations and an aperture stop having an F-number in the vicinity of diffraction limited. It is then acceptable to dispense with such an optical low-pass filter as described before.

Especially when the pixel pitch is small and the highest image-formation capability is obtained at a full-aperture stop, etc., it is acceptable to use an aperture stop having a constantly fixed inside diameter as means for controlling the size of an incident light beam on the image pickup plane instead of using an aperture stop having a variable inside diameter or a replaceable aperture stop. Preferably in that case, at least one of lens surfaces adjacent to the aperture stop should be set such that its convex surface is directed to the aperture stop and it extends through the inside diameter portion of the aperture stop, because there is no need of providing any additional space for the stop, contributing to length reductions of the zoom optical-system. It is also desirable to locate an optical element having a transmittance of up to 90% (where possible, the entrance and exit surfaces of the optical element should be defined by planar surfaces) in a space including the optical axis at least one lens away from the aperture stop or use means for replacing that optical element by another element having a different transmittance.

Alternatively, the electronic imaging system is designed in such a way as to have a plurality of apertures each of fixed aperture size, one of which can be inserted into any one of optical paths between the lens surface located nearest to the image side of the first lens group and the lens surface located nearest to the object side of the third lens group and can be replaced with another as well, so that illuminance on the image plane can be adjusted. Then, media whose transmittances with respect to 550 nm are different but less than 80% are filled in some of the plurality of apertures for light quantity control. Alternatively, when control is carried out in such a way as to provide a light quantity corresponding to such an F-number as given by a ($\mu$m)/F-number < 4.0, it is preferable to fill the apertures with medium whose transmittance with respect to 550 nm are different but less than 80%. In the range of the full-aperture value to values deviating from the aforesaid condition as an example, any medium is not used or dummy media having a transmittance of at least 91% with respect to 550 nm are used. In the range of the aforesaid condition, it is preferable to control the quantity of light with an ND filter or the like, rather than to decrease the diameter of the aperture stop to such an extent that the influence of diffraction appears.

Alternatively, it is acceptable to uniformly reduce the diameters of a plurality of apertures inversely with the F-numbers, so that optical low-pass filters having different frequency characteristics can be inserted in place of ND filters. As degradation by diffraction becomes worse with stop-down, it is desirable that the smaller the aperture diameter, the higher the frequency characteristics the optical low-pass filters have.

It is understood that when the relation of the full-aperture F-number at the wide-angle end to the pixel pitch a ($\mu$m) used satisfies F>a, it is acceptable to dispense with the optical low-pass filter. In other words, it is permissible that the all the medium on the optical axis between the zoom lens system and the electronic image pickup device is composed of air or a non-crystalline medium alone. This is because there are little frequency components capable of producing distortions upon bending due to a deterioration in the image-formation capability by reason of diffraction and geometric aberrations.

It is noted that satisfactory zoom lenses or electronic imaging systems may be set up by suitable combinations of the above conditions and the arrangements of the zoom lens and the electronic imaging system using the same.

It is understood that only the upper limit or only the lower limit may be applied to each of the above conditions, and that the values of these conditions in each of the following examples may be extended as far as the upper or lower limits thereof.

BRIEF DESCRIPTION OF THE DRAWINGS

Figs. 1(a), 1(b) and 1(c) are illustrative in section of Example 1 of the zoom lens according to the present invention at the wide-angle end (a), in an intermediate state (b) and at the telephoto end (c), respectively, when the zoom lens is focused on an object point at infinity.

Figs. 2(a), 2(b) and 2(c) are illustrative in section of the zoom lens of Example 2, similar to Figs. 1(a) to 1(c).

Figs. 3(a), 3(b) and 3(c) are sections in schematic illustrative of the zoom lens of Example 3, similar to Figs. 1(a) to 1(c).

Figs. 4(a), 4(b) and 4(c) are illustrative in section of the zoom lens Example 4, similar to Figs. 1(a) to 1(c).

Figs. 5(a), 5(b) and 5(c) are illustrative in section of the zoom lens of Example 5, similar to Figs. 1(a) to 1(c).

Figs. 6(a), 6(b) and 6(c) are illustrative in section of the zoom lens of Example 6, similar to Figs. 1(a) to 1(c).

Figs. 7(a), 7(b) and 7(c) are sections in schematic illustrative of the zoom lens of Example 7, similar to Figs. 1(a) to 1(c).

Figs. 8(a), 8(b) and 8(c) are illustrative in section of the zoom lens Example 8, similar to Figs. 1(a) to 1(c).

Figs. 9(a), 9(b) and 9(c) are illustrative in section of the zoom lens of Example 9, similar to Figs. 1(a) to 1(c).

Fig. 10 is an optical path diagram for the zoom lens of Example 1 when the optical path is bent in a state in focus at an infinite-distance object point at the wide-angle end.

Fig. 11 is illustrative of the diagonal length of the effective image pickup plane of an electronic image pickup device upon phototaking.

Fig. 12 is a diagram indicative of the transmittance characteristics of one example of the near-infrared sharp cut coat.

Fig. 13 is a diagram indicative of the transmittance characteristics of one example of the color filter located on the exit surface side of the low-pass filter.

Fig. 14 is a schematic illustrative of how the color filter elements are arranged in the complementary colors mosaic filter.

Fig. 15 is a diagram indicative of one example of the wavelength characteristics of the complementary colors mosaic filter.

Fig. 16 is a perspective view of details of one example of an aperture stop portion used in each example.

Figs. 17(a) and 17(b) are illustrative in detail of another example of the aperture stop portion used in each example.

Fig. 18 is illustrative in schematic of one embodiment of the variable-shape mirror that may be used as the optical device of the invention.

Fig. 19 is illustrative of one form of the electrode used with the variable-shape mirror of Fig. 18.

Fig. 20 is illustrative of another form of the electrode used with the variable-shape mirror of Fig. 18.

Fig. 21 is illustrative in schematic of another embodiment of the variable-shape mirror that may be used as the optical device of the invention.

Fig. 22 is illustrative in schematic of yet another embodiment of the variable-shape mirror that may be used as the optical device of the invention.

Fig. 23 is illustrative in schematic of a further embodiment of the variable-shape mirror that may be used as the optical device of the invention.

Fig. 24 is illustrative of the turn density of the thin-film coil in the embodiment of Fig. 23.

Fig. 25 is illustrative in schematic of a further embodiment of the variable-shape mirror that may be used as the optical device of the invention.

Fig. 26 is illustrative of one example of how the coils are located in the embodiment of Fig. 25.

Fig. 27 is illustrative of another example of how the coils 427 are located in the embodiment of Fig. 25.

Fig. 28 is illustrative of the locations of the permanent magnets suitable for the case where the coils are located as in Fig. 27 in the embodiment shown in Fig. 23.

Fig. 29 is a front perspective schematic illustrative of the appearance of a digital camera in which the optical path-bending zoom optical system of the invention is built.

Fig. 30 is a rear perspective schematic of the digital camera of Fig. 29.

Fig. 31 is a sectional schematic of the digital camera of Fig. 29.

Fig. 32 is a front perspective view of a personal computer with a cover opened, in which the optical path-bending zoom optical system of the invention is built as an objective optical system.

Fig. 33 is a sectional view of a phototaking optical system for the personal computer.

Fig. 34 is a side view of the state of Fig. 32.

Figs. 35(a) and35(b) are a front and a side view of a cellular phone in which the optical path-bending zoom optical system of the present invention is built as an objective optical system, and Fig. 35(c) is a sectional view of a phototaking optical system for the same.

DESCRIPTION OF THE PREFERRED EMBODIMENTS

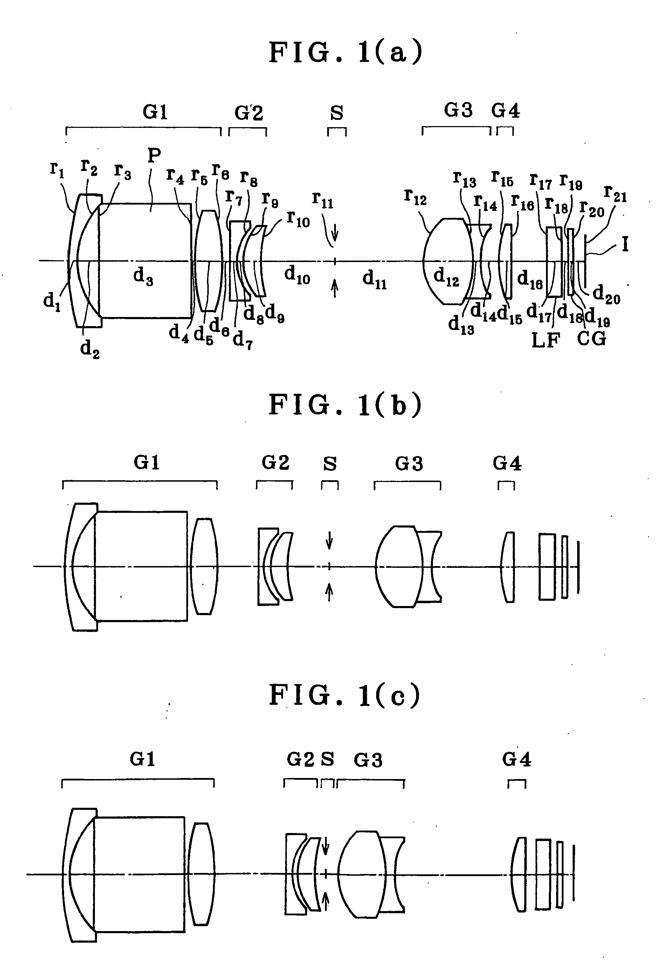

Examples 1 to 9 of the zoom lens according to the present invention are now explained. Sectional lens configurations of Examples 1 to 9 at the wide-angle end (a), in the intermediate state (b) and at the telephoto end (c) upon focusing on an object point at infinity are shown in Figs. 1 to 9. Throughout Figs. 1 to 9, the first lens group is indicated by G1, the second lens group by G2, a stop by S, the third lens group by G3, the fourth lens group by G4, an optical low-pass filter by LF, a cover glass for an electronic image pickup device CCD by CG, and the image plane of CCD by I. A plane-parallel plate or the taken-apart optical path-bending prism in the first lens group G1 is indicated by P. The maximum thickness of the optical low-pass filter LF used in these examples will be explained later. It is noted that instead of the near-infrared sharp cut coating, it is acceptable to use an optical low-pass filter LF coated directly with a near-infrared sharp cut coat, an infrared cut absorption filter or a transparent plane plate with a near-infrared sharp cut coating applied on its entrance surface.

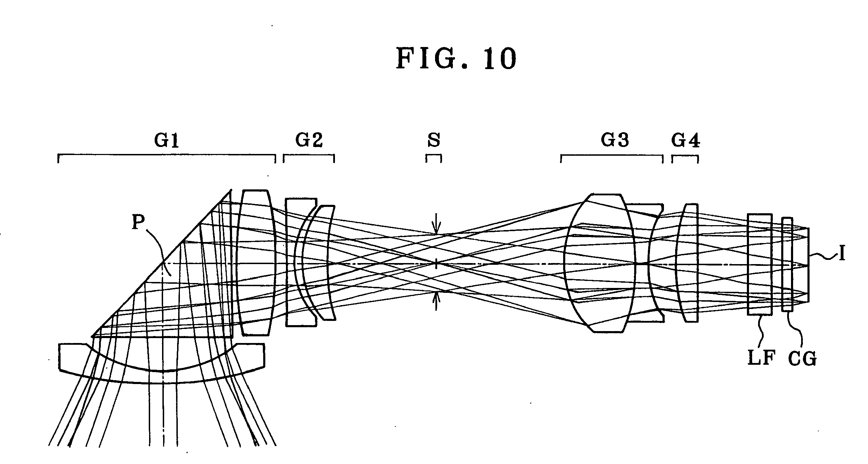

As shown typically in Fig. 10 that is an optical path diagram for the zoom lens of Example 1 in a state in focus at an infinite-distance object point at the wide-angle end, the optical path-bending prism P is configured as a reflecting prism for bending the optical path through 90°. It is noted that the aspect ratio of the effective image pickup area in Examples 1-9 is 3:4 and the optical path is bent in the lateral direction.

Example 1

As shown in Fig. 1(a), 1(b) and 1(c), Example 1 is directed to a zoom lens made up of a first lens group G1 composed of a negative meniscus lens convex on its object side, an optical path-bending prism P and a double-convex positive lens, a second lens group G2 composed of a double-concave negative lens and a positive meniscus lens convex on its object side, an aperture stop S, a third lens group G3 composed of a cemented lens consisting of a double-convex positive lens and a double-concave negative lens and a fourth lens group G4 composed of one positive meniscus lens convex on its object side. Upon zooming from the wide-angle end to the telephoto end of the zoom lens, the first lens group G1 and the aperture stop S remain fixed, the second lens group G2 moves toward the image plane side of the zoom lens, the third lens group G3 moves toward the object side of the zoom lens, and the fourth lens group G4 moves toward the image plane side. For focusing on a near distance subject, the fourth lens group G4 moves toward the object side.

Five aspheric surfaces are used; two at both surfaces of the double-concave negative lens in the second lens group G2, two at the surfaces nearest to the object and image plane sides of the third lens group G3 and one at the object-side surface of the positive meniscus lens in the fourth lens group G4.

Example 2

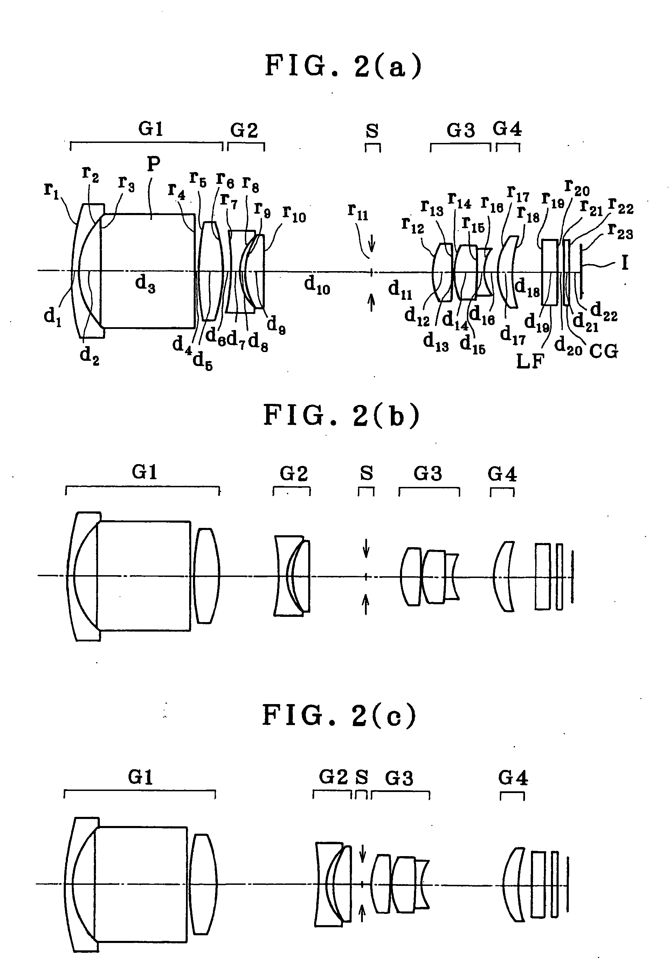

As shown in Figs. 2(a), 2(b) and 2(c), Example 2 is directed to a zoom lens made up of a first lens group G1 composed of a negative meniscus lens convex on its object side, an optical path-bending prism P and a double-convex positive lens, a second lens group G2 composed of a double-concave negative lens and a double-convex positive lens, an aperture stop S, a third lens group G3 composed of a double-convex positive lens and a cemented lens consisting of a double-convex positive lens and a double-concave negative lens and a fourth lens group G4 composed of one positive meniscus lens convex on its object side. Upon zooming from the wide-angle end to the telephoto end of the zoom lens, the first lens group G1 and the aperture stop S remain fixed, the second lens group G2 moves toward the image plane side of the zoom lens, the third lens group G3 moves toward the object side of the zoom lens, and the fourth lens group G4 moves toward the image plane side. For focusing on a near distance subject, the fourth lens group G4 moves toward the object side.

Four aspheric surfaces are used; one at the image-plane-side surface of the double-concave negative lens in the second lens group G2, two at both surfaces of the double-convex positive lens on the object side of the third lens group G3 and one at the object-side surface of the positive meniscus lens in the fourth lens group G4.

Example 3

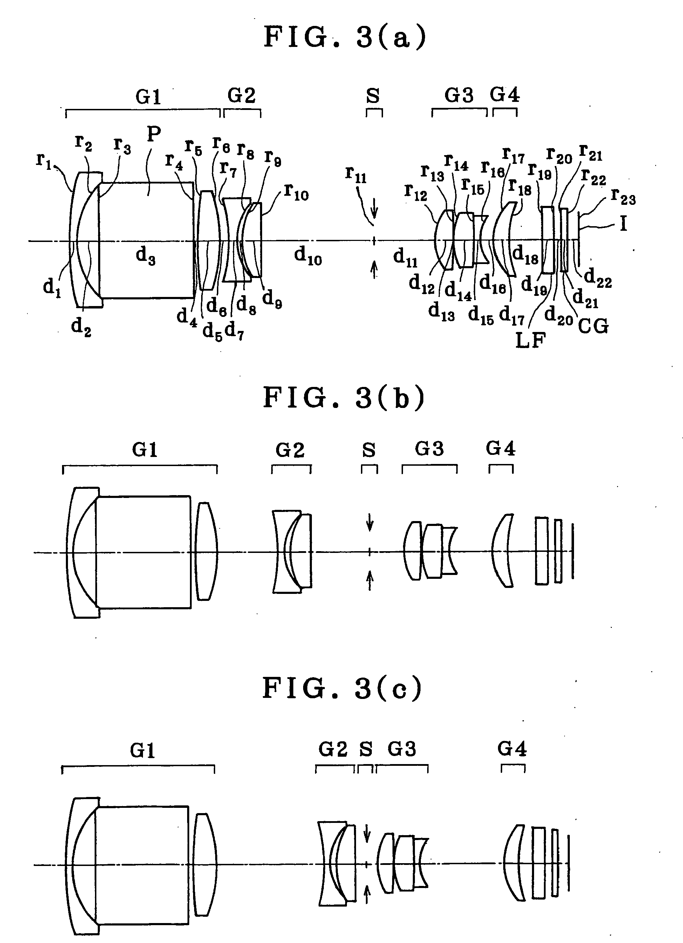

As shown in Figs. 3(a), 3(b) and 3(c), Example 3 is directed to a zoom lens made up of a first lens group G1 composed of a negative meniscus lens on its object side, an optical path-bending prism P and a double-convex positive lens, a second lens group G2 composed of a double-concave negative lens and a positive meniscus lens convex on its object side, an aperture stop S, a third lens group G3 composed of a double-convex positive lens and a cemented lens consisting of a double-convex positive lens and a double-concave negative lens, and a fourth lens group G4 composed of one positive meniscus lens convex on its object side. Upon zooming from the wide-angle end to the telephoto end of the zoom lens, the first lens group G1 and the aperture stop S remain fixed, the second lens group G2 moves toward the image plane side of the zoom lens, the third lens group G3 moves toward the object side of the zoom lens, and the fourth lens group G4 moves toward the image plane side. For focusing on a near distance subject, the fourth lens group G4 moves toward the object side.

Four aspheric surfaces are used; one at the image plane side-surface of the double-concave negative lens in the second lens group G2, two at both surfaces of the double-convex positive lens on the object side of the third lens group G3 and one at the object-side surface of the positive meniscus lens in the fourth lens group G4.

Example 4

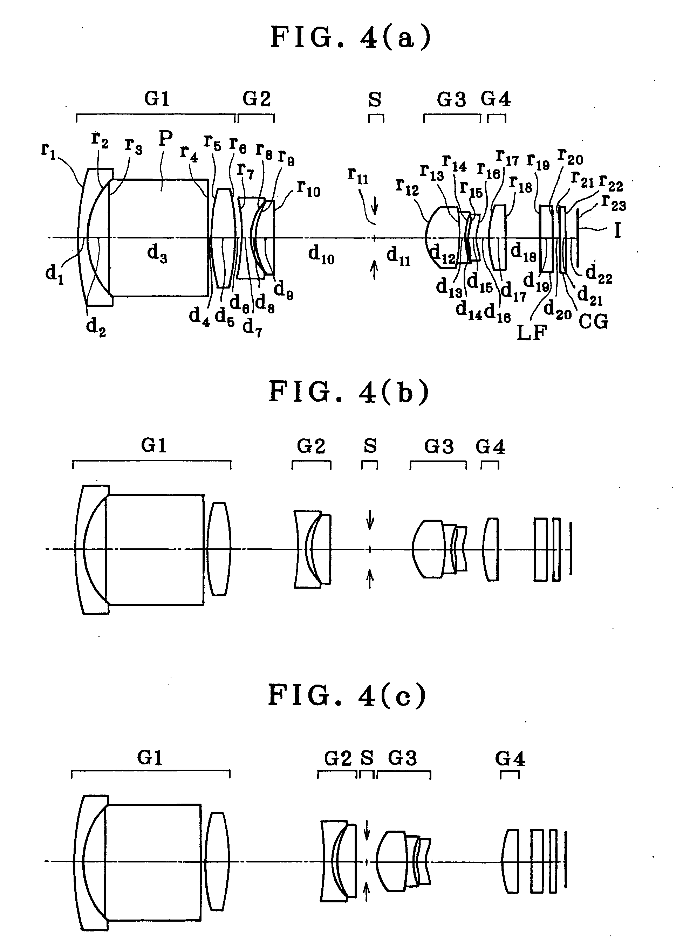

As shown in Figs. 4(a), 4(b) and 4(c), Example 4 is directed to a zoom lens made up of a first lens group G1 composed of a negative meniscus lens convex on its object side, an optical path-bending prism P and a double-convex positive lens, a second lens group G2 composed of a double-concave negative lens and a double-convex positive lens element, an aperture stop S, a third lens group G3 composed of a cemented lens consisting of a double-convex positive lens and a double-concave negative lens and a meniscus lens element convex on its object side and a fourth lens group G4 composed of one positive meniscus lens convex on its object side. Upon zooming from the wide-angle end to the telephoto end of the zoom lens, the first lens group G1 and the aperture stop S remain fixed, the second lens group G2 moves toward the image plane side of the zoom lens, the third lens group G3 moves toward the object side of the zoom lens, and the fourth lens group G4 moves slightly toward the object side and then toward the image plane side. For focusing on a near distance subject, the fourth lens group G4 moves toward the object side.

Five aspheric surfaces are used; two at both surfaces of the double-concave negative lens in the second lens group G2, one at the object-side surface of the cemented lens in the third lens group G3 and two at both surface of the meniscus lens in the third lens group G3.

Example 5

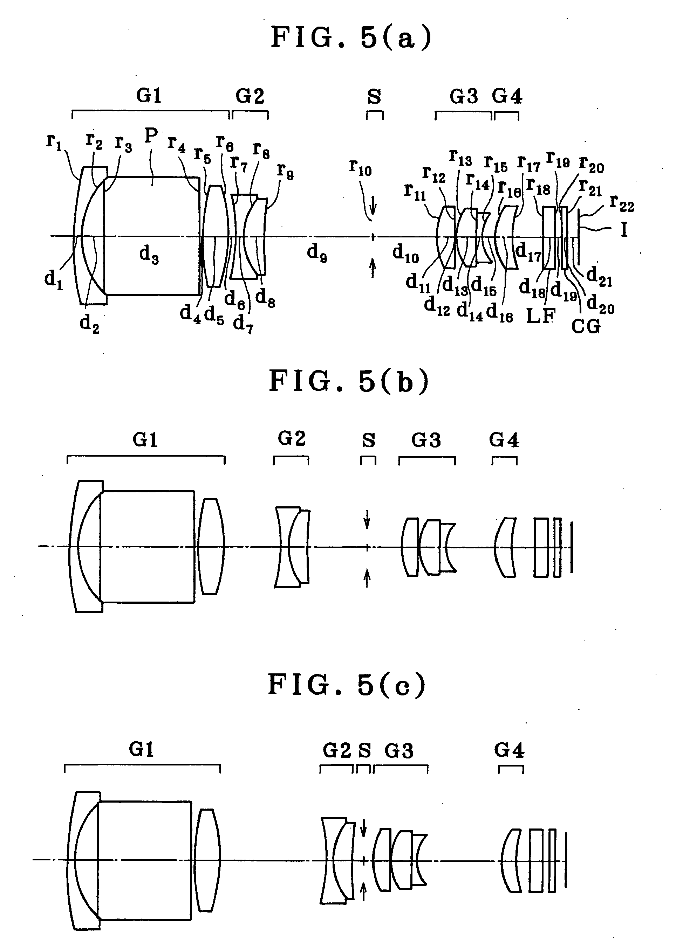

As shown in Figs. 5(a), 5(b) and 5(c), Example 5 is directed to a zoom lens made up of a first lens group G1 composed of a negative meniscus lens convex on its object side, an optical path-bending prism P and a double-convex positive lens, a second lens group G2 composed of a cemented lens consisting of a double-concave negative lens element and a negative meniscus lens convex on its object side, an aperture stop S, a third lens group G3 composed of a double-convex positive lens and a cemented lens consisting of a positive meniscus lens convex on its object side and a negative meniscus lens convex on its object side and a fourth lens group G4 composed of one positive meniscus lens convex on its object side. Upon zooming from the wide-angle end to the telephoto end of the zoom lens, the first lens group G1 and the aperture stop S remain fixed, the second lens group G2 moves toward the image plane side of the zoom lens, the third lens group G3 moves toward the object side of the zoom lens, and the fourth lens group G4 moves toward the image plane side. For focusing on a near distance subject, the fourth lens group G4 moves toward the object side.

Four aspheric surfaces are used; one at the image-plane-side surface of the negative meniscus lens in the first lens group G1, two at both surfaces of the double-convex positive lens in the third lens group G3 and one at the object-side surface of the positive meniscus lens in the fourth lens group G4.

Example 6

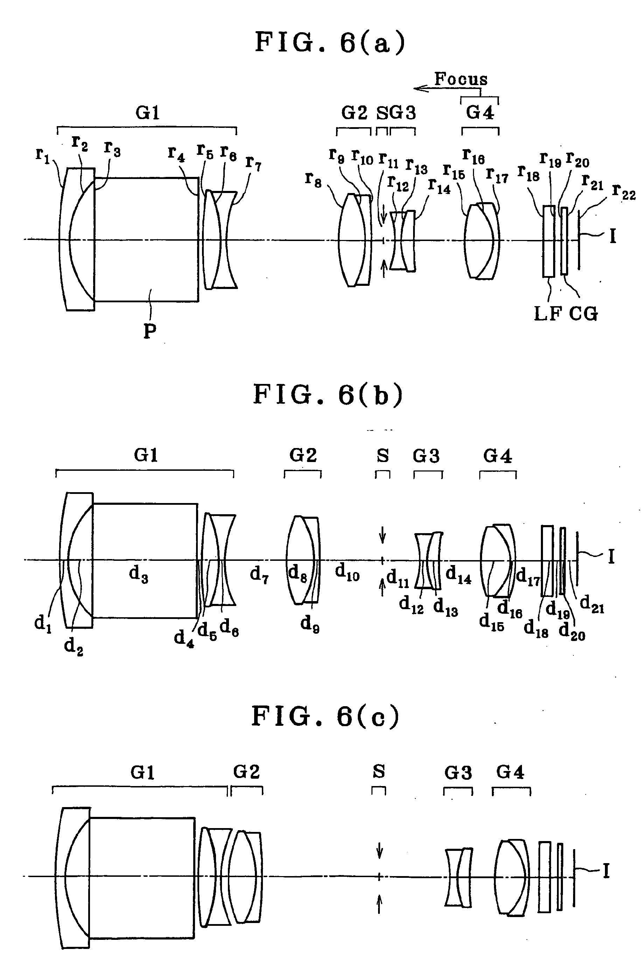

As shown in Figs. 6(a), 6(b) and 6(c), Example 6 is directed to a zoom lens made up of a first lens group G1 composed of a negative meniscus lens convex on its object side, an optical path-bending prism P and a cemented lens consisting of a double-convex positive lens and a double-concave negative lens, a second lens group G2 composed only of a cemented lens consisting of a double-convex positive lens and a negative meniscus lens concave on its object side, an aperture stop S, a third lens group G3 composed only of a cemented lens consisting of a double-concave negative lens and a negative meniscus lens convex on its object side and a fourth lens group G4 composed only of a cemented lens consisting of a double-convex positive lens and a negative meniscus lens concave on its object side. Upon zooming from the wide-angle end to the telephoto end of the zoom lens, the first lens group G1 and the aperture stop S remain fixed, the second lens group G2 moves toward the object side of the zoom lens, the third lens group G3 moves toward the image plane side of the zoom lens, and the fourth lens group G4 moves toward the image plane side while the spacing between it and the third lens group G3 becomes narrow. For focusing on a near distance subject, the fourth lens group G4 moves toward the object side.

Three aspheric surfaces are used; one at the object-side surface of the cemented lens in the first lens group G1, one at the surface nearest to the object side in the second lens group G2 and one at the surface nearest to the object side in the fourth lens group G4.

Example 7

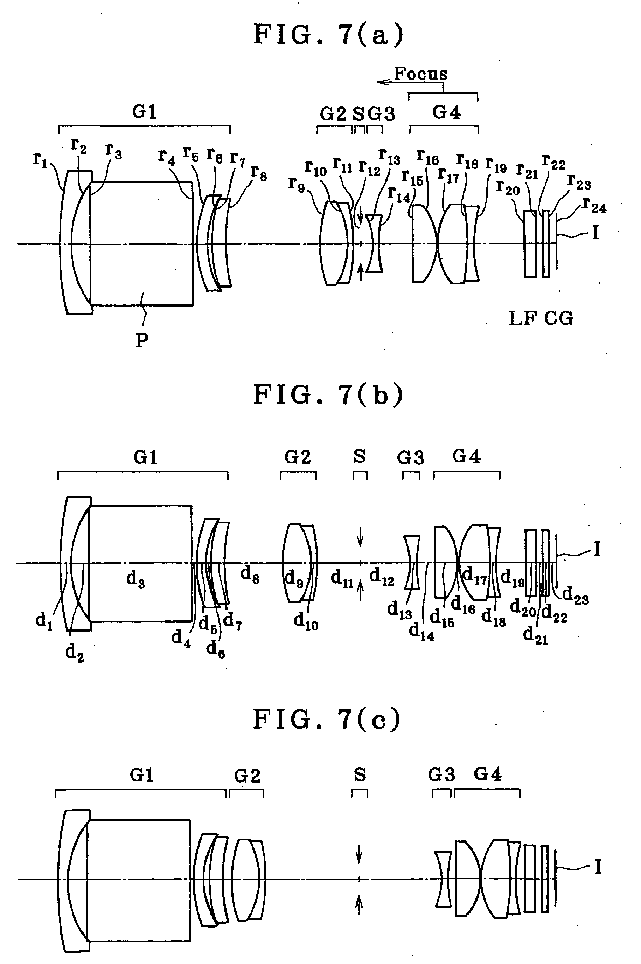

As shown in Figs. 7(a), 7(b) and 7(c), Example 7 is directed to a zoom lens made up of a first lens group G1 composed of a negative meniscus lens convex on its object side, an optical path-bending prism P, a negative meniscus lens convex on its object side and a positive meniscus lens convex on its object side, a second lens group G2 composed only of a cemented lens consisting of a double-convex positive lens and a negative meniscus lens concave on its object side, an aperture stop S, a third lens group G3 composed only of a double-concave negative lens and a fourth lens group G4 composed of a positive meniscus lens concave on its object side and a cemented lens consisting of a double-convex positive lens and a double-concave negative lens. Upon zooming from the wide-angle end to the telephoto end of the zoom lens, the first lens group G1 and the aperture stop S remain fixed, the second lens group G2 moves toward the object side of the zoom lens, the third lens group G3 moves toward the image plane side of the zoom lens, and the fourth lens group G4 moves toward the image plane side while the spacing between it and the third lens group G3 becomes narrow. For focusing on a near distance subject, the fourth lens group G4 moves toward the object side.

Three aspheric surfaces are used; one at the image-side surface of the negative meniscus lens located just after the optical path-bending prism P in the first lens group, one at the surface nearest to the object side in the second lens group G2, and one at the image-plane-side surface of the positive meniscus lens in the fourth lens group G4.

Example 8

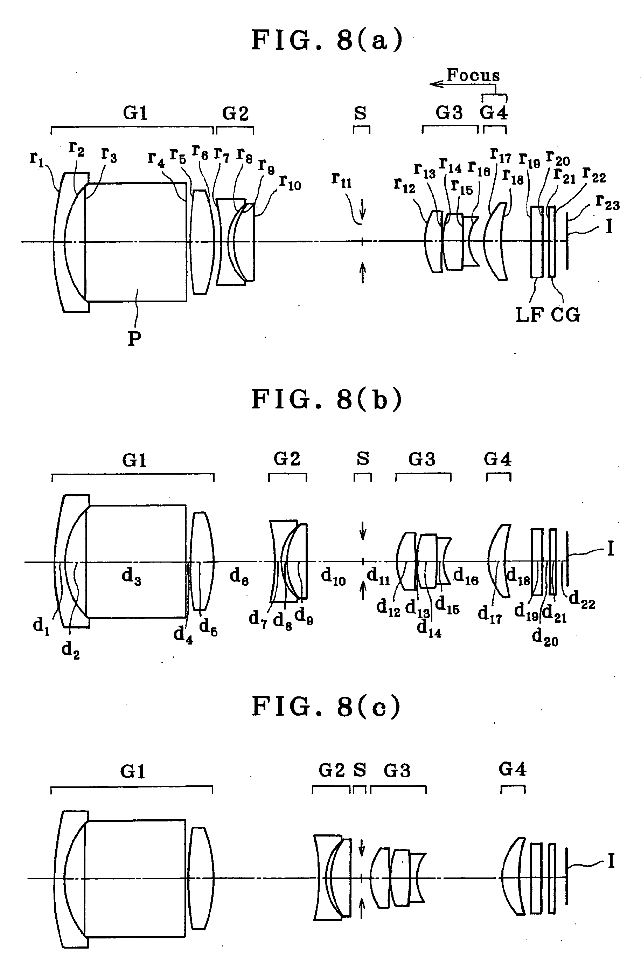

As shown in Figs. 8(a), 8(b) and 8(c), Example 8 is directed to a zoom lens made up of a first lens group G1 composed of a negative meniscus lens convex on its object side, an optical path-bending prism P and a double-convex positive lens, a second lens group G2 composed of a double-concave negative lens and a positive meniscus lens convex on its object side, an aperture stop S, a third lens group G3 composed of a double-concave negative lens and a cemented lens consisting of a double-convex positive lens and a double-concave negative lens, and a fourth lens group G4 composed only of a positive meniscus lens convex on its object side. Upon zooming from the wide-angle end to the telephoto end of the zoom lens, the first lens group G1 and the aperture stop S remain fixed, the second lens group G2 moves toward the image plane side of the zoom lens, the third lens group G3 moves toward the object side of the zoom lens, and the fourth lens group G4 moves toward the image plane side. For focusing on a near distance subject, the fourth lens group G4 moves toward the object side.

Four aspheric surfaces are used; one at the image plane side-surface of the double-concave negative lens in the second lens group G2, two at both surfaces of the single double-convex positive lens in the third lens group G3, and one at the object-side surface of the positive meniscus lens in the fourth lens group G4.

Example 9

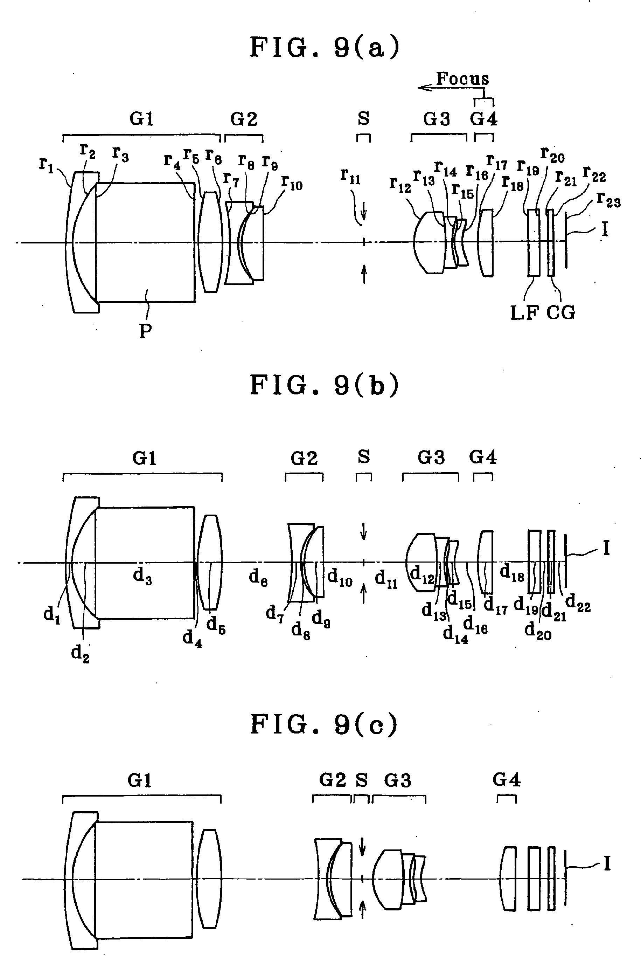

As shown in Figs. 9(a), 9(b) and 9(c), Example 9 is directed to a zoom lens made up of a first lens group G1 composed of a negative meniscus lens convex on its object side, an optical path-bending prism P and a double-convex positive lens, a second lens group G2 composed of a double-concave negative lens and a double-convex positive lens, an aperture stop S, a third lens group G3 composed of a cemented lens consisting of a double-convex positive lens and a double-concave negative lens and a negative meniscus lens convex on its object side, and a fourth lens group G4 composed only of a positive meniscus lens convex on its object side. Upon zooming from the wide-angle end to the telephoto end of the zoom lens, the first lens group G1 and the aperture stop S remain fixed, the second lens group G2 moves toward the image plane side of the zoom lens, the third lens group G3 moves toward the object side of the zoom lens, and the fourth lens group G4 moves first toward object side and then goes back toward the image plane side, and it is positioned nearer to the image plane side at the telephoto end than at the wide-angle end. For focusing on a near distance subject, the fourth lens group G4 moves toward the object side.

Five aspheric surfaces are used; two at both surfaces of the double-concave negative lens in the second lens group G2, one at the object-side surface of the cemented lens in the third lens group G3, and two at both surfaces of the single negative meniscus lens in the third lens group G3.

The numerical data on each example are given below. Symbols used hereinafter but not hereinbefore have the following meanings:

$f$: focal length of the zoom lens,

$F_{NO}$: F-number,

$\omega$: half angle of view,

WE: wide-angle end,

ST: intermediate state,

TE: telephoto end,

$r_1$, $r_2$, $\cdots$ : radius of curvature of each lens surface,

$d_1$, $d_2$, $\cdots$ : spacing between the respective lens surfaces,

$n_{d1}$, $n_{d2}$, $\cdots$: d-line refractive index of each lens, and

$\nu_{d1}$, $\nu_{d2}$, $\cdots$ : Abbe number of each lens.

Here let x be an optical axis on condition that the direction of propagation of light is positive and y be a direction orthogonal to the optical axis. Then, aspheric configuration is given by

$$x = (y^2/r) / [1 + \{1 - (K+1)(y/r)^2\}^{1/2}] + A_4 y^4 + A_6 y^6 + A_8 y^8 + A_{10} y^{10}$$

where r is a paraxial radius of curvature, K is a conical coefficient, and $A_4$, $A_6$, $A_8$ and $A_{10}$ are the fourth, sixth, eighth and tenth aspheric coefficients, respectively.

Example 1

| | | | | |
|---|---|---|---|---|
| $r_1 =$ | 31. 0100 | $d_1 = 1.0000$ | $n_{d1} = 1.80100$ | $\nu_{d1} = 34.97$ |
| $r_2 =$ | 9. 9641 | $d_2 = 2.9000$ | | |
| $r_3 =$ | $\infty$ | $d_3 = 12.0000$ | $n_{d2} = 1.80610$ | $\nu_{d2} = 40.92$ |
| $r_4 =$ | $\infty$ | $d_4 = 0.3000$ | | |
| $r_5 =$ | 23.6950 | $d_5 = 3.5400$ | $n_{d3} = 1.74100$ | $\nu_{d3} = 52.64$ |
| $r_6 =$ | -23.6475 | $d_6 =$ (Variable) | | |
| $r_7 =$ | -377. 9014 (Aspheric) | $d_7 = 0.8000$ | $n_{d4} = 1.80610$ | $\nu_{d4} = 40. 92$ |
| $r_8 =$ | 6. 4536 (Aspheric) | $d_8 = 0.7000$ | | |
| $r_9 =$ | 6. 8913 | $d_9 = 2.2000$ | $n_{d5} = 1.75520$ | $\nu_{d5} = 27.51$ |
| $r_{10} =$ | 16.1043 | $d_{10} =$ (Variable) | | |
| $r_{11} =$ | $\infty$ (Stop) | $d_{11} =$ (Variable) | | |
| $r_{12} =$ | 7. 5543 (Aspheric) | $d_{12} = 6.1695$ | $n_{d6} = 1.74320$ | $\nu_{d6} = 49.34$ |
| $r_{13} =$ | -13.0000 | $d_{13} = 1.0000$ | $n_{d7} = 1.84666$ | $\nu_{d7} = 23.78$ |
| $r_{14} =$ | 13.1848 (Aspheric) | $d_{14} =$ (Variable) | | |
| $r_{15} =$ | 12.3030 (Aspheric) | $d_{15} = 1.8000$ | $n_{d8} = 1.74320$ | $\nu_8 = 49.34$ |
| $r_{16} =$ | 1061.3553 | $d_{16} =$ (Variable) | | |
| $r_{17} =$ | $\infty$ | $d_{17} = 1.9000$ | $n_{d9} = 1.54771$ | $\nu_{d9} = 62.84$ |
| $r_{18} =$ | $\infty$ | $d_{18} = 0.8000$ | | |
| $r_{19} =$ | $\infty$ | $d_{19} = 0.7500$ | $n_{d10} = 1.51633$ | $\nu_{d10} = 64.14$ |
| $r_{20} =$ | $\infty$ | $d_{20} = 1.3565$ | | |
| $r_{21} =$ | $\infty$ (Image Plane) | | | |

Aspherical Coefficients

7 th surface
K = 0
$A_4 = 5. 2999 \times 10^{-4}$
$A_6 = -2.1607 \times 10^{-5}$
$A_8 = 1.8300 \times 10^{-7}$
$A_{10} = 0. 0000$
8 th surface
K = 0
$A_4 = 5.8050 \times 10^{-4}$
$A_6 = -1. 0603 \times 10^{-5}$
$A_8 = -7. 5526 \times 10^{-7}$
$A_{10} = 0.0000$
1 2 th surface
K = 0
$A_4 = 5.1734 \times 10^{-5}$
$A_6 = 1.0455 \times 10^{-6}$
$A_8 = -3.4185 \times 10^{-8}$
$A_{10} = 0.0000$

1 4 th surface
K = 0
$A_4 = 8.4429 \times 10^{-4}$
$A_6 = 2.1473 \times 10^{-5}$
$A_8 = 7.3738 \times 10^{-7}$
$A_{10} = 0.0000$
15 th surface
K = 0
$A_4 = -6.2738 \times 10^{-5}$
$A_6 = 7.6642 \times 10^{-6}$
$A_8 = -2.0106 \times 10^{-7}$
$A_{10} = 0.0000$

Zooming Data (∞)

|  | WE | ST | TE |
|---|---|---|---|
| f (mm) | 6.01125 | 10.40282 | 17.99133 |
| $F_{NO}$ | 2.5820 | 3.5145 | 4.7679 |
| ω (°) | 32.7 | 19.6 | 11.4 |
| $d_6$ | 0.78801 | 4.80346 | 8.70695 |
| $d_{10}$ | 9.39271 | 5.38074 | 1.47422 |
| $d_{11}$ | 11.13320 | 5.78312 | 1.48451 |
| $d_{14}$ | 2.19671 | 8.56256 | 14.78227 |
| $d_{16}$ | 4.12457 | 3.11055 | 1.18821 |

Example 2

| | | | |
|---|---|---|---|
| $r_1 =$ 31.1674 | $d_1 = 1.0000$ | $n_{d1} = 1.80518$ | $\nu_1 = 25.42$ |
| $r_2 =$ 10.0082 | $d_2 = 2.8000$ | | |
| $r_3 =$ ∞ | $d_3 = 12.0000$ | $n_{d2} = 1.80610$ | $\nu_{d2} = 40.92$ |
| $r_4 =$ ∞ | $d_4 = 0.3000$ | | |
| $r_5 =$ 38.3752 | $d_5 = 3.3000$ | $n_{d3} = 1.77250$ | $\nu_{d3} = 49.60$ |
| $r_6 =$ -19.0539 | $d_6 =$(Variable) | | |
| $r_7 =$ -27.7782 | $d_7 = 1.0000$ | $n_{d4} = 1.80610$ | $\nu_{d4} = 40.92$ |
| $r_8 =$ 5.9968(Aspheric) | $d_8 = 0.7000$ | | |
| $r_9 =$ 8.0742 | $d_9 = 2.3000$ | $n_{d5} = 1.75520$ | $\nu_{d5} = 27.51$ |
| $r_{10} =$ -358.1053 | $d_{10} =$(Variable) | | |
| $r_{11} =$ ∞ (Stop) | $d_{11} =$(Variable) | | |
| $r_{12} =$ 8.4600(Aspheric) | $d_{12} = 2.5000$ | $n_{d6} = 1.74320$ | $\nu_{d6} = 49.34$ |
| $r_{13} =$ -116.7590(Aspheric) | $d_{13} = 0.1500$ | | |
| $r_{14} =$ 8.8060 | $d_{14} = 3.0000$ | $n_{d7} = 1.60311$ | $\nu_{d7} = 60.64$ |
| $r_{15} =$ -40.0000 | $d_{15} = 0.7000$ | $n_{d8} = 1.84666$ | $\nu_{d8} = 23.78$ |
| $r_{16} =$ 4.6054 | $d_{16} =$(Variable) | | |
| $r_{17} =$ 6.7337(Aspheric) | $d_{17} = 1.9700$ | $n_{d9} = 1.69350$ | $\nu_{d9} = 53.21$ |
| $r_{18} =$ 14.1820 | $d_{18} =$(Variable) | | |
| $r_{19} =$ ∞ | $d_{19} = 1.9000$ | $n_{d10} = 1.54771$ | $\nu_{d10} = 62.84$ |
| $r_{20} =$ ∞ | $d_{20} = 0.8000$ | | |
| $r_{21} =$ ∞ | $d_{21} = 0.7500$ | $n_{d11} = 1.51633$ | $\nu_{d11} = 64.14$ |
| $r_{22} =$ ∞ | $d_{22} = 1.3596$ | | |
| $r_{23} =$ ∞ (Image Plane) | | | |

Aspherical Coefficients

8 th surface
K = 0
$A_4 = -2.7926 \times 10^{-4}$
$A_6 = -5.5281 \times 10^{-6}$
$A_8 = -3.0031 \times 10^{-7}$
$A_{10} = 0.0000$
1 2 th surface
K = 0
$A_4 = -1.0549 \times 10^{-4}$
$A_6 = -1.1474 \times 10^{-6}$
$A_8 = -5.2653 \times 10^{-8}$
$A_{10} = 0.0000$
1 3 th surface
K = 0
$A_4 = -4.5663 \times 10^{-5}$
$A_6 = 6.3255 \times 10^{-6}$
$A_8 = -3.7416 \times 10^{-7}$
$A_{10} = 0.0000$
1 7 th surface
K = 0
$A_4 = -3.4690 \times 10^{-4}$
$A_6 = 2.1996 \times 10^{-6}$
$A_8 = -1.8422 \times 10^{-7}$
$A_{10} = 0.0000$

Zooming Data (∞)

|  | WE | ST | TE |
|---|---|---|---|
| f (mm) | 6.00633 | 10.39946 | 17.99885 |
| $F_{NO}$ | 2.8069 | 3.3441 | 4.0747 |
| ω (°) | 32.4 | 18.9 | 10.9 |
| $d_6$ | 0.79862 | 7.41546 | 13.08585 |
| $d_{10}$ | 13.68612 | 7.06296 | 1.39894 |
| $d_{11}$ | 7.73864 | 4.51502 | 1.19986 |
| $d_{16}$ | 1.69904 | 5.23999 | 10.27759 |
| $d_{18}$ | 3.54003 | 3.22246 | 1.50021 |

Example 3

| | | | | |
|---|---|---|---|---|
| $r_1 =$ | 31.4475 | $d_1 = 1.0000$ | $n_{d1} = 1.80518$ | $\nu_{d1} = 25.42$ |
| $r_2 =$ | 10.0029 | $d_2 = 2.8000$ | | |
| $r_3 =$ | ∞ | $d_3 = 12.0000$ | $n_{d2} = 1.80610$ | $\nu_{d2} = 40.92$ |
| $r_4 =$ | ∞ | $d_4 = 0.3000$ | | |
| $r_5 =$ | 40.9109 | $d_5 = 3.1000$ | $n_{d3} = 1.77250$ | $\nu_{d3} = 49.60$ |
| $r_6 =$ | -18.5523 | $d_6 =$ (Variable) | | |
| $r_7 =$ | -27.7365 | $d_7 = 0.9000$ | $n_{d4} = 1.80610$ | $\nu_{d4} = 40.92$ |
| $r_8 =$ | 6.1675(Aspheric) | $d_8 = 0.6000$ | | |

(continued)

| | | | | |
|---|---|---|---|---|
| $r_9$ = | 7.8689 | $d_9$ = 2.5000 | $n_{d5}$ =1.75520 | $\nu_{d5}$ =27.51 |
| $r_{10}$= | 541. 9130 | $d_{10}$=(Variable) | | |
| $r_{11}$= | ∞ (Stop) | $d_{11}$=(Variable) | | |
| $r_{12}$= | 6.8303 (Aspheric) | $d_{12}$= 2.2000 | $n_{d6}$ =1.74320 | $\nu_{d6}$ =49.34 |
| $r_{13}$ = | -168.3254 (Aspheric) | $d_{13}$ = 0.1500 | | |
| $r_{14}$= | 10.3767 | $d_{14}$ = 2.5000 | $n_{d7}$ =1.60311 | $\nu_{d7}$ =60.64 |
| $r_{15}$= | -100.0000 | $d_{15}$= 0. 7000 | $n_{d8}$ =1.84666 | $\nu_{d8}$ =23.78 |
| $r_{16}$= | 4.2552 | $d_{16}$=(Variable) | | |
| $r_{17}$= | 6.4363 (Aspheric) | $d_{17}$= 2.0000 | $n_{d9}$ =1.58313 | $\nu_{d9}$ =59.38 |
| $r_{18}$= | 16.8235 | $d_{18}$=(Variable) | | |
| $r_{19}$= | ∞ | $d_{19}$ = 1. 5000 | $n_{d10}$=1.54771 | $\nu_{d10}$=62.84 |
| $r_{20}$= | ∞ | $d_{20}$= 0.8000 | | |
| $r_{21}$= | ∞ | $d_{21}$= 0.7500 | $n_{d11}$=1.51633 | $\nu_{d11}$=64.14 |
| $r_{22}$= | ∞ | $d_{22}$ = 1. 3596 | | |
| $r_{23}$= | ∞ (Image Plane) | | | |

Aspherical Coefficients

8 th surface
K = 0
$A_4$ =-2. 1223 $\times$ 10$^{-4}$
$A_6$ =-3. 9476 $\times$ 10$^{-6}$
$A_8$ =-2. 3492 $\times$ 10$^{-7}$
$A_{10}$= 0.0000
1 2 th surface
K = 0
$A_4$ =-9. 9966 $\times$ 10$^{-5}$
$A_6$ =-4. 8770 $\times$ 10$^{-6}$
$A_8$ = 7. 8835 $\times$ 10$^{-7}$
$A_{10}$= 0. 0000
1 3 th surface
K = 0
$A_4$ = 1.6853 $\times$ 10$^{-4}$
$A_6$ = 4.2908 $\times$ 10$^{-6}$
$A_8$ = 8.3613 $\times$ 10$^{-7}$
$A_{10}$= 0.0000
1 7 th surface
K = 0
$A_4$ =-3. 5205 $\times$ 10$^{-4}$
$A_6$ =-1. 4117 $\times$ 10$^{-6}$
$A_8$ =-1.1635 $\times$ 10$^{-7}$
$A_{10}$= 0.0000

Zooming Data (∞)

| | WE | ST | TE |
|---|---|---|---|
| f (mm) | 6.00728 | 10.39935 | 17.99830 |
| $F_{NO}$ | 2.7463 | 3.3017 | 4.0273 |
| ω (°) | 32.4 | 18. 9 | 11. 0 |
| $d_6$ | 0. 79769 | 7. 29414 | 13. 01239 |

(continued)

| | WE | ST | TE |
|---|---|---|---|
| d$_{10}$ | 13.61214 | 7.11013 | 1.39751 |
| d$_{11}$ | 7. 70485 | 4. 37777 | 1. 19903 |
| d$_{16}$ | 1.69969 | 5.42936 | 10. 44566 |
| d$_{18}$ | 3. 74084 | 3. 33843 | 1.50064 |

Example 4

| | | | |
|---|---|---|---|
| r$_1$ = | 32.0016 | d$_1$ = 1.0000 | n$_{d1}$ =1.75520 | $\nu_{d1}$ =27.51 |
| r$_2$ = | 10. 0102 | d$_2$ = 2. 8000 | | |
| r$_3$ = | ∞ | d$_3$ = 12.0000 | n$_{d2}$ =1.80610 | $\nu_{d2}$ =40.92 |
| r$_4$ = | ∞ | d$_4$ = 0. 3000 | | |
| r$_5$ = | 23.5519 | d$_5$ = 3.1000 | n$_{d3}$ =1.72916 | $\nu_{d3}$ =54.68 |
| r$_6$ = | -24.7555 | d$_6$ =(Variable) | | |
| r$_7$ = | -21.9861(Aspheric) | d$_7$ = 0.9000 | n$_{d4}$ =1.80610 | $\nu_{d4}$ =40.92 |
| r$_8$ = | 5.7215(Aspheric) | d$_8$ = 0.6000 | | |
| r$_9$ = | 7.9386 | d$_9$ = 2.5000 | n$_{d5}$ =1.78470 | $\nu_{d5}$ =26.29 |
| r$_{10}$= | -388.5176 | d$_{10}$=(Variable) | | |
| r$_{11}$= | ∞ (Stop) | d$_{11}$=(Variable) | | |
| r$_{12}$= | 5.6674(Aspheric) | d$_{12}$= 4.0000 | n$_{d6}$ =1.74320 | $\nu_{d6}$ =49.34 |
| r$_{13}$= | -19.0000 | d$_{13}$= 0. 7000 | n$_{d7}$ =1.84666 | $\nu_{d7}$ =23.78 |
| r$_{14}$ = | 7. 7986 | d$_{14}$= 0. 3000 | | |
| r$_{15}$= | 3. 8662(Aspheric) | d$_{15}$= 1.0000 | n$_{d8}$ =1. 69350 | $\nu_{d8}$ =53. 21 |
| r$_{16}$ = | 3.6817(Aspheric) | d$_{16}$=(Variable) | | |
| r$_{17}$= | 13. 0325 | d$_{17}$= 2. 0000 | n$_{d9}$ =1.48749 | $\nu_{d9}$ =70.23 |
| r$_{18}$= | 201. 0398 | d$_{18}$=(Variable) | | |
| r$_{19}$= | ∞ | d$_{19}$= 1. 5000 | n$_{d10}$=1.54771 | $\nu_{d10}$=62.84 |
| r$_{20}$= | ∞ | d$_{20}$ = 0.8000 | | |
| r$_{21}$= | ∞ | d$_{21}$ = 0. 7500 | n$_{d11}$=1.51633 | $\nu_{d11}$=64.14 |
| r$_{22}$= | ∞ | d$_{22}$= 1.3599 | | |
| r$_{23}$= | ∞ (Image Plane) | | | |

Aspherical Coefficients

7 th surface
K = 0
A$_4$ = 2.0496 × 10$^{-4}$
A$_6$ =-3.4919 × 10$^{-6}$
A$_8$ = 7.4208 × 10$^{-9}$
A$_{10}$= 0.0000
8 th surface
K = 0
A$_4$ =-3. 6883 × 10$^{-4}$
A$_6$ = 3.4613 × 10$^{-6}$
A$_8$ =-9. 0209 × 10$^{-7}$
A$_{10}$= 0.0000
1 2 th surface
K = 0
A$_4$ = 5.4882 × 10$^{-4}$

$A_6 = -1.8282 \times 10^{-5}$
$A_8 = 1.6707 \times 10^{-6}$
$A_{10} = 0.0000$
1 5 th surface
$K = 0$
$A_4 = -8.1049 \times 10^{-3}$
$A_6 = -4.3019 \times 10^{-4}$
$A_8 = -3.1973 \times 10^{-5}$
$A_{10} = 0.0000$
1 6 th surface
$K = 0$
$A_4 = -6.4092 \times 10^{-3}$
$A_6 = -7.3362 \times 10^{-4}$
$A_8 = 2.9898 \times 10^{-5}$
$A_{10} = 0.0000$

Zooming Data ($\infty$)

|  | WE | ST | TE |
|---|---|---|---|
| f (mm) | 6.00844 | 10.40337 | 17.99810 |
| $F_{NO}$ | 2.7659 | 2.9849 | 4.0444 |
| $\omega$ ( ° ) | 32.6 | 19.2 | 11.3 |
| $d_6$ | 0.80018 | 8.47206 | 12.07930 |
| $d_{10}$ | 12.67757 | 5.00686 | 1.39837 |
| $d_{11}$ | 6.26991 | 5.19965 | 1.19782 |
| $d_{16}$ | 1.70036 | 2.60388 | 9.42234 |
| $d_{18}$ | 4.14771 | 4.30945 | 1.49796 |

Example 5

| | | | | |
|---|---|---|---|---|
| $r_1 =$ | 37.5126 | $d_1 = 1.0000$ | $n_{d1} = 1.78470$ | $\nu_{d1} = 26.29$ |
| $r_2 =$ | 9.9406 (Aspheric) | $d_2 = 2.8000$ | | |
| $r_3 =$ | $\infty$ | $d_3 = 12.0000$ | $n_{d2} = 1.80610$ | $\nu_{d2} = 40.92$ |
| $r_4 =$ | $\infty$ | $d_4 = 0.3000$ | | |
| $r_5 =$ | 33.8530 | $d_5 = 3.1000$ | $n_{d3} = 1.77250$ | $\nu_{d3} = 49.60$ |
| $r_6 =$ | -21.7247 | $d_6 =$(Variable) | | |
| $r_7 =$ | -22.9665 | $d_7 = 0.9000$ | $n_{d4} = 1.77250$ | $\nu_{d4} = 49.60$ |
| $r_8 =$ | 7.9115 | $d_8 = 2.5000$ | $n_{d5} = 1.71736$ | $\nu_{d5} = 29.52$ |
| $r_9 =$ | 55.6404 | $d_9 =$(Variable) | | |
| $r_{10} =$ | $\infty$ (Stop) | $d_{10} =$(Variable) | | |
| $r_{11} =$ | 8.1626 (Aspheric) | $d_{11} = 2.2000$ | $n_{d6}$ s $= 1.74320$ | $\nu_{d6} = 49.34$ |
| $r_{12} =$ | -278.0091 (Aspheric) | $d_{12} = 0.1500$ | | |
| $r_{13} =$ | 7.0366 | $d_{13} = 2.5000$ | $n_{d7} = 1.60311$ | $\nu_{d7} = 60.64$ |
| $r_{14} =$ | 50.0000 | $d_{14} = 0.7000$ | $n_{d8} = 1.84666$ | $\nu_{d8} = 23.78$ |
| $r_{15} =$ | 4.2115 | $d_{15} =$(Variable) | | |
| $r_{16} =$ | 6.7994(Aspheric) | $d_{16} = 2.0000$ | $n_{d9} = 1.58313$ | $\nu_{d9} = 59.38$ |
| $r_{17} =$ | 13.6965 | $d_{17} =$(Variable) | | |
| $r_{18} =$ | $\infty$ | $d_{18} = 1.5000$ | $n_{d10} = 1.54771$ | $\nu_{d10} = 62.84$ |
| $r_{19} =$ | $\infty$ | $d_{19} = 0.8000$ | | |
| $r_{20} =$ | $\infty$ | $d_{20} = 0.7500$ | $n_{d11} = 1.51633$ | $\nu_{d11} = 64.14$ |

(continued)

| | | |
|---|---|---|
| $r_{21}=$ | $\infty$ | $d_{21}= 1.3586$ |
| $r_{22}=$ | $\infty$ (Image Plane) | |

Aspherical Coefficients

2nd surface
$K = 0$
$A_4 =-4.8339 \times 10^{-5}$
$A_6 = 1.9771 \times 10^{-7}$
$A_8 =-1.3364 \times 10^{-8}$
$A_{10}= 0.0000$
1 1 th surface
$K = 0$
$A_4 =-2.9041 \times 10^{-4}$
$A_6 = 2.3089 \times 10^{-5}$
$A_8 =-1.0828 \times 10^{-6}$
$A_{10} = 0.0000$
1 2 th surface
$K = 0$
$A_4 =-1.9946 \times 10^{-4}$
$A_6 = 3.1348 \times 10^{-5}$
$A_8 =-1.4447 \times 10^{-6}$
$A_{10}= 0.0000$
1 6 th surface
$K = 0$
$A_4 =-2.4256 \times 10^{-4}$
$A_6 =-6.3914 \times 10^{-6}$
$A_8 = 1.6763 \times 10^{-7}$
$A_{10}= 0.0000$

Zooming Data ($\infty$)

| | WE | ST | TE |
|---|---|---|---|
| f (mm) | 6.02709 | 10.40552 | 17.99646 |
| $F_{No}$ | 2.6193 | 3.3129 | 4.0433 |
| $\omega$ (°) | 32.3 | 18.9 | 11.0 |
| $d_6$ | 0.80042 | 6.82411 | 13.07966 |
| $d_9$ | 13.67313 | 7.63416 | 1.39413 |
| $d_{10}$ | 7.94928 | 4.18630 | 1.19879 |
| $d_{15}$ | 1.69392 | 6.18157 | 10.44930 |
| $d_{17}$ | 3.50041 | 2.76626 | 1.49565 |

Example 6

| | | | | |
|---|---|---|---|---|
| $r_1 =$ | 41.8576 | $d_1 = 1.1000$ | $n_{d1} =1.74320$ | $\nu_{d1} =49.34$ |
| $r_2 =$ | 11.0536 | $d_2 = 3.0000$ | | |
| $r_3 =$ | $\infty$ | $d_3 = 12.5000$ | $nd_2 =1.80610$ | $\nu_{d2} =40.92$ |
| $r_4 =$ | $\infty$ | $d_4 = 0.4000$ | | |

(continued)

| | | | |
|---|---|---|---|
| $r_5$ = | 45.3710(Aspheric) | d 5 = 2.2000 | $n_{d3}$ =1.80610 | $\nu_{d3}$ =40.92 |
| $r_6$ = | -17.7512 | $d_6$ = 0.7000 | $nd_4$ =1.51633 | $\nu_{d4}$ =64.14 |
| $r_7$ = | 14.3571 | $d_7$ =(Variable) | | |
| $r_8$ = | 14.3503(Aspheric) | $d_8$ = 3. 5000 | $n_{d5}$ =1.74320 | $\nu_{d5}$ =49.34 |
| $r_9$ = | -12. 0000 | $d_9$ = 0. 7000 | $nd_6$ =1.84666 | $\nu_{d6}$ =23.78 |
| $r_{10}$= | -45.8572 | $d_{10}$ =(Variable) | | |
| $r_{11}$= | ∞ (Stop) | $d_{11}$=(Variable) | | |
| $r_{12}$= | -10.4621 | $d_{12}$= 0.7000 | $n_{d7}$ =1.48749 | $\nu_{d7}$ =70.23 |
| $r_{13}$= | 8.5670 | $d_{13}$ = 1.6000 | $n_{d8}$ =1.80610 | $\nu_{d8}$ =40.92 |
| $r_{14}$= | 26.4156 | $d_{14}$=(Variable) | | |
| $r_{15}$ = | 13.3825(Aspheric) | $d_{15}$= 3. 5000 | $n_{d9}$ =1.74320 | $\nu_{d9}$ =49.34 |
| $r_{16}$= | -6.0000 | $d_{16}$ = 0.7000 | $n_{d10}$=1. 84666 | $\nu_{d10}$ =23.78 |
| $r_{17}$= | -14.5742 | $d_{17}$=(Variable) | | |
| $r_{18}$= | ∞ | $d_{18}$= 1.4400 | $n_{d11}$ =1.54771 | $\nu_{d11}$ =62.84 |
| $r_{19}$= | ∞ | $d_{19}$= 0.8000 | | |
| $r_{20}$ = | ∞ | $d_{20}$= 0.6000 | $n_{d12}$=1.51633 | $\nu_{d12}$=64.14 |
| $r_{21}$ = | ∞ | $d_{21}$ = 1.3584 | | |
| $r_{22}$= | ∞ (Image Plane) | | | |

Aspherical Coefficients

5 th surface
K = 0
$A_4$ = 1.2258 × 10$^{-5}$
$A_6$ = 7. 3190 × 10$^{-7}$
$A_8$ =-3.7784 × 10$^{-9}$
$A_{10}$= 0. 0000
8 th surface
K = 0
$A_4$ =-5. 3259 × 10$^{-6}$
$A_6$ =-6. 4038 × 10$^{-7}$
$A_8$ = 1. 8252 × 10$^{-9}$
$A_{10}$= 0. 0000
1 5 th surface
K = 0
$A_4$ =-1.5212 × 10$^{-4}$
$A_6$ =-5.5015 × 10$^{-6}$
$A_8$ = 1. 5406 × 10$^{-7}$
$A_{10}$= 0.0000

Zooming Data (∞)

| | WE | ST | TE |
|---|---|---|---|
| f (mm) | 6. 02091 | 10.38642 | 17.98914 |
| $F_{No}$ | 2. 8018 | 3. 1929 | 3. 6847 |
| 2 $\omega$ (°) | 32. 3° | 19. 0° | 11.2° |
| $d_7$ | 13. 81034 | 7.49989 | 0. 79781 |
| $d_{10}$ | 1. 59335 | 7.88812 | 14. 60612 |
| $d_{11}$ | 1. 39678 | 4. 73086 | 8. 71101 |

(continued)

|  | WE | ST | TE |
|---|---|---|---|
| $d_{14}$ | 6. 18478 | 5.03200 | 2. 99514 |
| $d_{17}$ | 5. 28210 | 3. 10678 | 1. 15795 |

Example 7

| $r_1 =$ | 45.3203 | $d_1 = 1.1000$ | $n_{d1} = 1.74320$ | $\nu_{d1} = 49.34$ |
|---|---|---|---|---|
| $r_2 =$ | 11.8037 | $d_2 = 2.5000$ | | |
| $r_3 =$ | ∞ | $d_3 = 12.5000$ | $n_{d2} = 1.80610$ | $\nu_{d2} = 40.92$ |
| $r_4 =$ | ∞ | $d_4 = 0.4000$ | | |
| $r_5 =$ | 16.2211 | $d_5 = 1.2000$ | $n_{d3} = 1.74330$ | $\nu_{d3} = 49.33$ |
| $r_6 =$ | 9.0671(Aspheric) | $d_6 = 0.4611$ | | |
| $r_7 =$ | 14.4963 | $d_7 = 1.8200$ | $n_{d4} = 1.84666$ | $\nu_{d4} = 23.78$ |
| $r_8 =$ | 26.0382 | $d_8 =$(variable) | | |
| $r_9 =$ | 14. 0677 (Aspheric) | $d_9 = 3.5782$ | $n_{d5} = 1.69350$ | $\nu_{d5} = 53.20$ |
| $r_{10} =$ | -10.0812 | $d_{10} = 0.7000$ | $n_{d6} = 1.84666$ | $\nu_{d6} = 23.78$ |
| $r_{11} =$ | -23.3575 | $d_{11} =$(Variable) | | |
| $r_{12} =$ | ∞ (Stop) | $d_{12} =$(Variable) | | |
| $r_{13} =$ | -8.5467 | $d_{13} = 0.7000$ | $n_{d7} = 1.49700$ | $\nu_{d7} = 81.54$ |
| $r_{14} =$ | 15.2744 | $d_{14} =$(Variable) | | |
| $r_{15} =$ | $-1.421 \times 10^4$ | $d_{15} = 2.8906$ | $n_{d8} = 1.58913$ | $\nu_{d8} = 61.28$ |
| $r_{16} =$ | -7. 2797 (Aspheric) | $d_{16} = 0.1000$ | | |
| $r_{17} =$ | 7.8321 | $d_{17} = 3.7517$ | $n_{d9} = 1.48749$ | $\nu_{d9} = 70.23$ |
| $r_{18} =$ | -27.9866 | $d_{18} = 0.7000$ | $n_{d10} = 1.84666$ | $\nu_{d10} = 23.78$ |
| $r_{19} =$ | 19.9907 | $d_{19} =$(Variable) | | |
| $r_{20} =$ | ∞ | $d_{20} = 1.4400$ | $n_{d11} = 1.54771$ | $\nu_{d11} = 62.84$ |
| $r_{21} =$ | ∞ | $d_{21} = 0.8000$ | | |
| $r_{22} =$ | ∞ | $d_{22} = 0.8000$ | $n_{d12} = 1.51633$ | $\nu_{d12} = 64.14$ |
| $r_{23} =$ | ∞ | $d_{23} = 0.9602$ | | |
| $r_{24} =$ | ∞ (Image Plane) | | | |

Aspherical Coefficients

6 th surface
$K = 0$
$A_4 = -1.4385 \times 10^{-4}$
$A_6 = -1.5962 \times 10^{-6}$
$A_8 = 3.4139 \times 10^{-8}$
$A_{10} = -8.3837 \times 10^{-10}$
9 th surface
$K = 0$
$A_4 = -5.6504 \times 10^{-5}$
$A_6 = 7.1962 \times 10^{-8}$
$A_8 = 5.9510 \times 10^{-9}$
$A_{10} = 0.0000$
1 6 th surface
$K = 0$
$A_4 = 2.2972 \times 10^{-4}$
$A_6 = 3.0217 \times 10^{-6}$

$A_8 = -1.0499 \times 10^{-7}$
$A_{10} = 5.7830 \times 10^{-9}$

Zooming Data (∞)

|  | WE | ST | TE |
|---|---|---|---|
| f (mm) | 6.04972 | 10.38530 | 17.99216 |
| $F_{No}$ | 2.8000 | 3.4840 | 3.9842 |
| 2 ω (°) | 33.1° | 19.1° | 11.0° |
| $d_8$ | 11.57476 | 7.09532 | 0.95447 |
| $d_{11}$ | 0.95647 | 5.43485 | 11.57823 |
| $d_{12}$ | 1.43450 | 6.00801 | 9.90933 |
| $d_{14}$ | 4.15447 | 2.21894 | 0.97868 |
| $d_{19}$ | 6.27292 | 3.63457 | 0.97395 |

Example 8

| | | | |
|---|---|---|---|
| $r_1$ = 31.4475 | $d_1$ = 1.0000 | $n_{d1}$ =1.80518 | $\nu_{d1}$=25.42 |
| $r_2$ = 10.0029 | $d_2$ = 2.8000 | | |
| $r_3$ = ∞ | $d_3$ = 12.0000 | $n_{d2}$ =1.80610 | $\nu_{d2}$ =40.92 |
| $r_4$ = ∞ | $d_4$ = 0.3000 | | |
| $r_5$ = 40.9109 | $d_5$ = 3.1000 | $n_{d3}$ =1.77250 | $\nu_{d3}$ =49.60 |
| $r_6$ = -18.5523 | $d_6$ =(Variable) | | |
| $r_7$ = -27.7365 | $d_7$ = 0.9000 | $n_{d4}$ =1.80610 | $\nu_{d4}$ =40.92 |
| $r_8$ = 6.1675(Aspheric) | $d_8$ = 0.6000 | | |
| $r_9$ = 7.8689 | $d_9$ = 2.5000 | $n_{d5}$ =1.75520 | $\nu_{d5}$ =27.51 |
| $r_{10}$= 541.9130 | $d_{10}$=(Variable) | | |
| $r_{11}$= ∞ (Stop) | $d_{11}$=(Variable) | | |
| $r_{12}$= 6.8303(Aspheric) | $d_{12}$= 2.2000 | $n_{d6}$ =1.74320 | $\nu_{d6}$ =49.34 |
| $r_{13}$= -168.3254(Aspheric) | $d_{13}$= 0.1500 | | |
| $r_{14}$= 10.3767 | $d_{14}$ = 2.5000 | $n_{d7}$=1.60311 | $\nu_{d7}$ =60.64 |
| $r_{15}$ = -100.0000 | $d_{15}$= 0.7000 | $n_{d8}$ =1.84666 | $\nu_{d8}$ =23.78 |
| $r_{16}$= 4.2552 | $d_{16}$=(Variable) | | |
| $r_{17}$= 6.4363(Aspheric) | $d_{17}$= 2.0000 | $n_{d9}$ =1.58313 | $\nu_{d9}$ =59.38 |
| $r_{18}$= 16.8235 | $d_{18}$=(Variable) | | |
| $r_{19}$= ∞ | $d_{19}$ =1.5000 | $n_{d10}$=1.54771 | $\nu_{d10}$=62.84 |
| $r_{20}$= ∞ | $d_{20}$= 0.8000 | | |
| $r_{21}$= ∞ | $d_{21}$ = 0.7500 | $n_{d11}$=1.51633 | $\nu_{d11}$=64.14 |
| $r_{22}$= ∞ | $d_{22}$ = 1.3596 | | |
| $r_{23}$= ∞ (Image Plane) | | | |

Aspherical Coefficients

8th surface
K = 0
$A_4$ =-2.1223 × $10^{-4}$
$A_6$ =-3.9476 × $10^{-6}$
$A_8$ =-2.3492 × $10^{-7}$

$A_{10}$= 0.0000

1 2 th surface

K = 0

$A_4$ =-9. 9966 × 10$^{-5}$

$A_6$ =-4. 8770 × 10$^{-6}$

$A_8$ = 7. 8835 × 10$^{-7}$

$A_{10}$= 0. 0000

1 3 th surface

K = 0

$A_4$ = 1.6853 × 10$^{-4}$

$A_6$ = 4.2908 × 10$^{-6}$

$A_8$ = 8.3613 × 10$^{-7}$

$A_{10}$= 0.0000

1 7 th surface

K = 0

$A_4$ =-3.5205 × 10$^{-4}$

$A_6$ =-1.4117 × 10$^{-6}$

$A_8$ =-1.1635 × 10$^{-7}$

$A_{10}$= 0.0000

Zooming Data (∞)

|  | WE | ST | TE |
|---|---|---|---|
| f (mm) | 6.00728 | 10.39935 | 17.99830 |
| $F_{No}$ | 2.7463 | 3. 3017 | 4.0273 |
| 2 ω (°) | 32.4 ° | 18.9 ° | 11.0 ° |
| $d_6$ | 0. 79769 | 7. 29414 | 13. 01239 |
| $d_{10}$ | 13.61214 | 7.11013 | 1.39751 |
| $d_{11}$ | 7. 70485 | 4. 37777 | 1. 19903 |
| $d_{16}$ | 1.69969 | 5. 42936 | 10. 44566 |
| $d_{18}$ | 3. 74084 | 3. 33843 | 1. 50064 |

Example 9

| $r_1$ = | 32.0016 | $d_1$ = 1. 0000 | $n_{d1}$ =1.75520 | $ν_{d1}$ =27.51 |
|---|---|---|---|---|
| $r_2$ = | 10. 0102 | $d_2$ = 2.8000 | | |
| $r_3$ = | ∞ | $d_3$ = 12.0000 | $n_{d2}$ =1.80610 | $ν_{d2}$ =40.92 |
| $r_4$ = | ∞ | $d_4$ = 0. 3000 | | |
| $r_5$ = | 23. 5519 | $d_5$ = 3.1000 | $n_{d3}$ =1. 72916 | $ν_{d3}$ =54.68 |
| $r_6$ = | -24.7555 | $d_6$ =(Variable) | | |
| $r_7$ = | -21.9861 (Aspheric) | $d_7$ = 0. 9000 | $n_{d4}$ =1.80610 | $ν_{d4}$ =40. 92 |
| $r_8$ = | 5. 7215 (Aspheric) | $d_8$ = 0. 6000 | | |
| $r_9$= | 7.9386 | $d_9$ = 2.5000 | $n_{d5}$ =1.78470 | $ν_{d5}$ =26.29 |
| $r_{10}$= | -388.5176 | $d_{10}$=(Variable) | | |
| $r_{11}$= | ∞ (Stop) | $d_{11}$=(Variable) | | |
| $r_{12}$= | 5.6674 (Aspheric) | $d_{12}$= 4. 0000 | $n_{d6}$ =1.74320 | $ν_{d6}$ =49.34 |
| $r_{13}$= | -19.0000 | $d_{13}$= 0.7000 | $n_{d7}$ =1.84666 | $ν_{d7}$ =23.78 |
| $r_{14}$= | 7.7986 | $d_{14}$ =0.3000 | | |
| $r_{15}$= | 3.8662 (Aspheric) | $d_{15}$ = 1. 0000 | $n_{d8}$ =1.69350 | $ν_{d8}$ =53.21 |
| $r_{16}$= | 3.6817(Aspheric) | $d_{16}$=(Variable) | | |

(continued)

| | | | |
|---|---|---|---|
| $r_{17}$ = | 13.0325 | $d_{17}$= 2.0000 | $n_{d8}$ =1.48749 | $\nu_{d9}$ =70.23 |
| $r_{18}$= | 201. 0398 | $d_{18}$=(Variable) | | |
| $r_{19}$= | ∞ | $d_{19}$= 1.5000 | $n_{d10}$ =1.54771 | $\nu_{d10}$ 0=62.84 |
| $r_{20}$ = | ∞ | $d_{20}$= 0.8000 | | |
| $r_{21}$ = | ∞ | $d_{21}$ = 0.7500 | $n_{d11}$ =1.51633 | $\nu_{d11}$=64.14 |
| $r_{22}$= | ∞ | $d_{22}$= 1.3599 | | |
| $r_{23}$= | ∞ (Image Plane) | | | |

Aspherical Coefficients

7 th surface
$K = 0$
$A_4 = 2. 0496 \times 10^{-4}$
$A_6 = -3. 4919 \times 10^{-6}$
$A_8 = 7. 4208 \times 10^{-9}$
$A_{10}= 0.0000$
8 th surface
$K = 0$
$A_4 = -3. 6883 \times 10^{-4}$
$A_6 = 3. 4613 \times 10^{-6}$
$A_8 = -9. 0209 \times 10^{-7}$
$A_{10}= 0. 0000$
1 2 th surface
$K = 0$
$A_4 = 5.4882 \times 10^{-4}$
$A_6 = -1.8282 \times 10^{-5}$
$A_8 = 1.6707 \times 10^{-6}$
$A_{10}= 0. 0000$
1 5 th surface
$K = 0$
$A_4 = -8.1049 \times 10^{-3}$
$A_6 = -4. 3019 \times 10^{-4}$
$A_8 = -3.1973 \times 10^{-5}$
$A_{10}= 0. 0000$
1 6 th surface
$K = 0$
$A_4 = -6. 4092 \times 10^{-3}$
$A_6 = -7.3362 \times 10^{-4}$
$A_8 = 2.9898 \times 10^{-5}$
$A_{10}= 0.0000$

Zooming Data (∞)

| | WE | ST | TE |
|---|---|---|---|
| f (mm) | 6.00844 | 10.40337 | 17.99810 |
| $F_{No}$ | 2. 7659 | 2. 9849 | 4. 0444 |
| 2 ω (°) | 32.6° | 19.2° | 11.3° |
| $d_6$ | 0.80018 | 8.47206 | 12. 07930 |
| $d_{10}$ | 12. 67757 | 5. 00686 | 1. 39837 |
| $d_{11}$ | 6. 26991 | 5.19965 | 1.19782 |

(continued)

| | WE | ST | TE |
|---|---|---|---|
| $d_{16}$ | 1.70036 | 2. 60388 | 9. 42234 |
| $d_{18}$ | 4.14771 | 4.30945 | 1.49796 |

The values of conditions (1) to (25) in each example are enumerated below with the values of a, $t_{LPF}$ and L concerning condition (26). It is noted that conditions (15) to (17) mean (15-1) to (15-3), (16-1) to (16-3) and (17-1) to (17-3), respectively.

| | Example 1 | Example 2 | Example 3 | Example 4 | Example 5 |
|---|---|---|---|---|---|
| (1) | 1.80053 | 1.79882 | 1.78926 | 1.89185 | 1.68172 |
| (2) | 1. 58638 | 1. 62590 | 1. 62599 | 1. 63599 | 1.68575 |
| (3) | 1.34851 | 1.33482 | 1.33482 | 1.33482 | 1.33482 |
| (4) | 1. 80610 | 1.80610 | 1. 80610 | 1.80610 | 1.80610 |
| (5) | 0.91863 | 0.80674 | 0.81555 | 0.65256 | 0.69581 |
| (6) | 0.27229 | 0.29553 | 0.29058 | 0.35869 | 0.29828 |
| (7) | 0.94273 | 0.31220 | 0.32096 | 0.63812 | 0.74098 |
| (8) | 2.31092 | 2.42296 | 2.43781 | 2.46849 | 2.78836 |
| (9) | 1.62212 | 1.68225 | 1.69788 | 1.44993 | 1.75852 |
| (10) | 1.15319 | 1.17060 | 1.15739 | 1.13543 | 1.11669 |
| (11) | 1. 96930 | 1. 50318 | 1.52111 | 1. 28830 | 1. 42870 |
| (12) | 1.21850 | 0.53216 | 0.53263 | 0.44969 | 0.54976 |
| (13) | 0.30433 | 0.31196 | 0.34434 | 0.52241 | 0.29698 |
| (14) | 0.36543 | 0.28287 | 0.28291 | 0.28300 | 0.28105 |
| (15) | 1.74534 | 0.52298 | 0.41007 | 1.37605 | 0.59851 |
| (16) | -0. 56154 | -0.18250 | -0. 07300 | -0.38421 | 0.14600 |
| (17) | 25.56 | 36.86 | 36.86 | 25.56 | 36.86 |
| (18) | -1.02346 | -2.80812 | -2.23928 | -1.13863 | -2.97167 |
| (19) | 0.43618 | 0.43762 | 0.43731 | 0.25625 | 0.34893 |
| (20) | 0.00100 | 0.33644 | 0.37601 | -0.02491 | 0.21822 |
| (21) | 0.96642 | 0.64490 | 0.63618 | 0.58701 | 0.48756 |
| (22) | 1. 0 | 1. 0 | 1. 0 | 1. 0 | 1. 0 |
| (23) | 0.04 | 0.04 | 0.04 | 0.04 | 0.04 |
| (24) | 0.0 0 | 0.0 | 0.0 0 | 0.0 | 0.0 |
| (25) | 1.06 | 1. 06 | 1.06 | 1. 06 | 1. 06 |
| a | 3.5 | 3.9 | 3.7 | 2.9 | 2.5 |
| $t_{LPF}$ | 0. 55 | 0. 58 | 0. 52 | 0. 38 | 0.30 |
| L | 7.30 | 7.30 | 7.30 | 7.30 | 7.30 |

Set out below are the values of conditions (31)-(39) and (22)-(25) in Examples 6-9 as well as the values of a, $t_{LPF}$ and L with respect to condition (26).

| | Example 6 | Example 7 | Example 8 | Example 9 |
|---|---|---|---|---|
| (31) | 0.60560 | 0.57756 | 0.75702 | 0.61047 |
| (32) | 1.80610 | 1.80610 | 1.80610 | 1.80610 |
| (33) | 0.94808 | 0.94808 | 0.91016 | 0.91016 |
| (34) | 0.56208 | 0.79787 | - | - |
| (35) | 0.56385 | 0.62526 | - | - |
| (36) | 0.93560 | 1.06367 | - | - |
| (37) | -0.00648 | -0.05351 | - | - |
| (38) | 1.71767 | 1.70435 | - | - |
| (39) | 0.01821 | 0.15965 | - | - |

(continued)

|  | Example 6 | Example 7 | Example 8 | Example 9 |
|---|---|---|---|---|
| (22) | 1. 0 | 1. 0 | 1.0 | 1.0 |
| (23) | 0.04 | 0.04 | 0.04 | 0.04 |
| (25) | 0.0 | 0.0 | 0.0 | 0.0 |
| (25) | 1.06 | 1.06 | 1.06 | 1.06 |
| a | 3.5 | 2.5 | 2.0 | 3.0 |
| $t_{LPF}$ | 0.42 | 0.30 | 0.24 | 0.36 |
| L | 7.3 | 7.3 | 7.3 | 7.3 |

Referring to the numerical data about Examples 1 to 5, it is understood that the optical low-pass filter is composed of a plurality of filter elements, and the thickness of the infrared cut filter, etc. is included in such data. Thus, the maximum thickness corresponds to the value of $T_{LPF}$ in the above table, rather than the value of $t_{LPF}$. It is also understood that any of the following ten combinations of a and $t_{LPF}$ may be used.

|  | 1 | 2 | 3 | 4 | 5 |
|---|---|---|---|---|---|
| a | 3.5 | 3.9 | 3.7 | 2.9 | 2.5 |
| $t_{LPF}$ | 0.55 | 0.58 | 0.52 | 0.38 | 0.30 |
|  | 6 | 7 | 8 | 9 | 10 |
| a | 2.8 | 2.7 | 2.6 | 3.3 | 3.1 |
| $t_{LPF}$ | 0.25 | 0.25 | 0.26 | 0.24 | 0.25 |

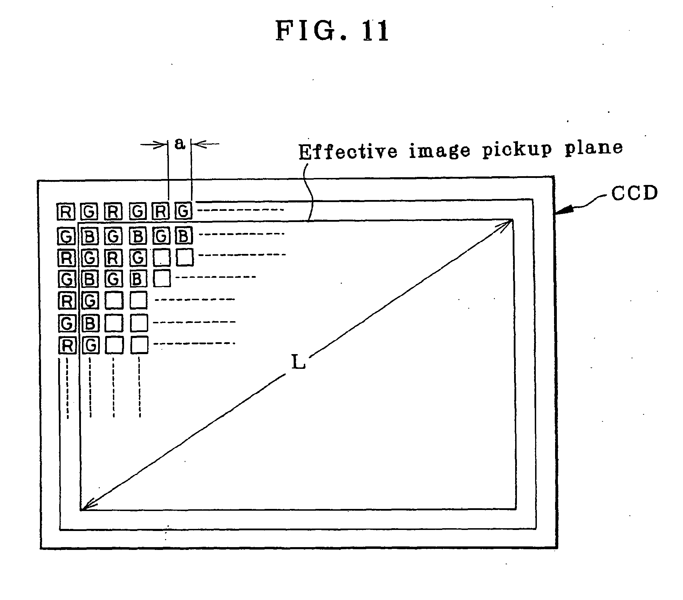

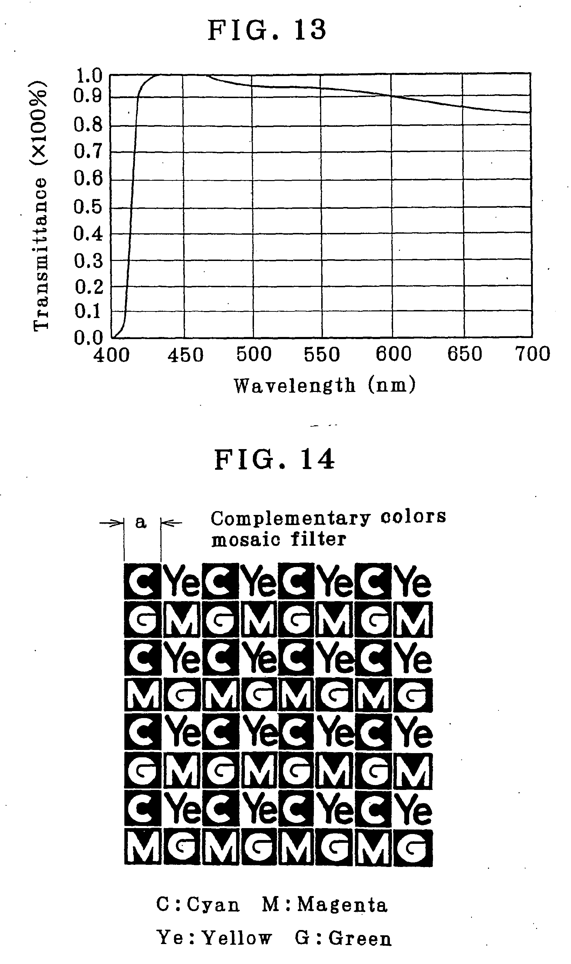

Here the diagonal length L of the effective image pickup plane of the electronic image pickup device and the pixel spacing a are explained. Fig. 11 is illustrative of one exemplary pixel array for the electronic image pickup device, wherein R (red), G (green) and B (blue) pixels or four pixels, i.e., cyan, magenta, yellow and green (G) pixels (see Fig. 14) are mosaically arranged at the pixel spacing a. The "effective image pickup plane" used herein is understood to mean a certain area in the photoelectric conversion surface on an image pickup device used for the reproduction of a phototaken image (on a personal computer or by a printer). The effective image pickup plane shown in Fig. 11 is set at an area narrower than the total photoelectric conversion surface on the image pickup device, depending on the performance of the optical system used (an image circle that can be ensured by the performance of the optical system). The diagonal length L of an effective image pickup plane is thus defined by that of the effective image pickup plane. Although the image pickup range used for image reproduction may be variable, it is noted that when the zoom lens of the present invention is used on an image pickup apparatus having such functions, the diagonal length L of its effective image pickup plane varies. In that case, the diagonal length L of the effective image pickup plane according to the present invention is defined by the maximum value in the widest possible range for L.

In each example of the invention, on the image side of the final lens group there is provided a near-infrared cut filter or an optical low-pass filter LF with a near-infrared cut coat surface applied on its entrance side. This near-infrared cut filter or near-infrared cut coat surface is designed to have a transmittance of at least 80% at 600 nm wavelength and a transmittance of up to 10% at 700 nm wavelength. More specifically, the near-infrared cut filter or the near-infrared sharp cut coat has a multilayer structure made up of 27 such layers as mentioned below; however, the design wavelength is 780 nm.

| Substrate | Material | Physical Thickness (nm) | $\lambda/4$ |
|---|---|---|---|
| 1st layer | $Al_2O_3$ | 58.96 | 0.50 |
| 2nd layer | $TiO_2$ | 84.19 | 1.00 |
| 3rd layer | $SiO_2$ | 134.14 | 1.00 |
| 4th layer | $TiO_2$ | 84.19 | 1.00 |
| 5th layer | $SiO_2$ | 134.14 | 1.00 |
| 6th layer | $TiO_2$ | 84.19 | 1.00 |
| 7th layer | $SiO_2$ | 134.14 | 1.00 |
| 8th layer | $TiO_2$ | 84.19 | 1.00 |
| 9th layer | $SiO_2$ | 134.14 | 1.00 |
| 10th layer | $TiO_2$ | 84.19 | 1.00 |

(continued)

| | | | |
|---|---|---|---|
| 11th layer | SiO$_2$ | 134.14 | 1.00 |
| 12th layer | TiO$_2$ | 84.19 | 1.00 |
| 13th layer | SiO$_2$ | 134.14 | 1.00 |
| 14th layer | TiO$_2$ | 84.19 | 1.00 |
| 15th layer | SiO$_2$ | 178.41 | 1.33 |
| 16th layer | TiO$_2$ | 101.03 | 1.21 |
| 17th layer | SiO$_2$ | 167.67 | 1.25 |
| 18th layer | TiO$_2$ | 96.82 | 1.15 |
| 19th layer | SiO$_2$ | 147.55 | 1.05 |
| 20th layer | TiO$_2$ | 84.19 | 1.00 |
| 21st layer | SiO$_2$ | 160.97 | 1.20 |
| 22nd layer | TiO$_2$ | 84.19 | 1.00 |
| 23rd layer | SiO$_2$ | 154.26 | 1.15 |
| 24th layer | TiO$_2$ | 95.13 | 1.13 |
| 25th layer | SiO$_2$ | 160.97 | 1.20 |
| 26th layer | TiO$_2$ | 99.34 | 1.18 |
| 27th layer | SiO$_2$ | 87.19 | 0.65 |

Air

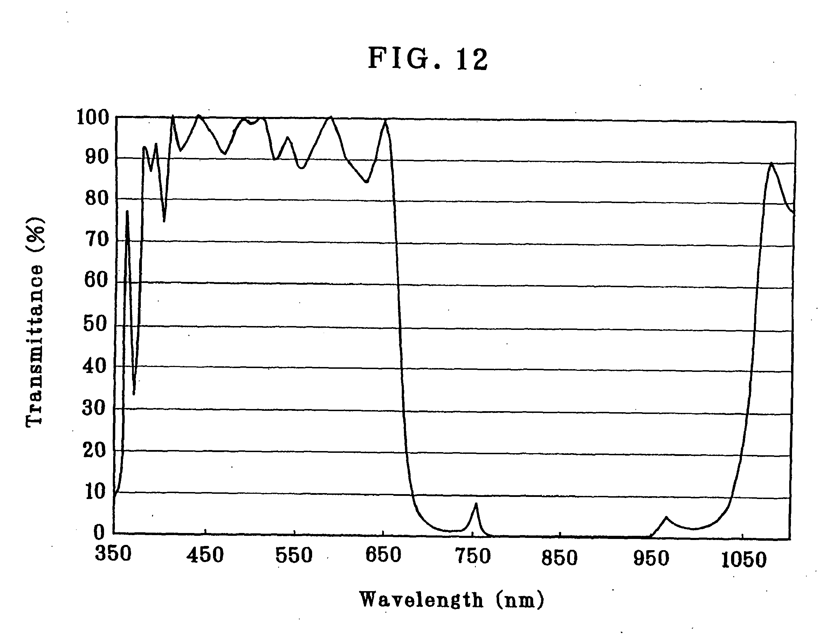

The aforesaid near-infrared sharp cut coat has such transmittance characteristics as shown in Fig. 12.

The low-pass filter LF is provided on its exit surface side with a color filter or coat for reducing the transmission of colors at such a short wavelength region as shown in Fig. 13, thereby making the color reproducibility of an electronic image much higher.

Preferably, that filter or coat should be designed such that the ratio of the transmittance of 420 nm wavelength with respect to the transmittance of a wavelength in the range of 400 nm to 700 nm at which the highest transmittance is found is at least 15% and that the ratio of 400 nm wavelength with respect to the highest wavelength transmittance is up to 6%.

It is thus possible to reduce a discernible difference between the colors perceived by the human eyes and the colors of the image to be picked up and reproduced. In other words, it is possible to prevent degradation in images due to the fact that a color of short wavelength less likely to be perceived through the human sense of sight can be readily seen by the human eyes.

When the ratio of the 400 nm wavelength transmittance is greater than 6%, the short wavelength region less likely to be perceived by the human eyes would be reproduced with perceivable wavelengths. Conversely, when the ratio of the 420 nm wavelength transmittance is less than 15%, a wavelength region perceivable by the human eyes is less likely to be reproduced, putting colors in an ill-balanced state.

Such means for limiting wavelengths can be more effective for imaging systems using a complementary colors mosaic filter.

In each of the aforesaid examples, coating is applied in such a way that, as shown in Fig. 13, the transmittance for 400 nm wavelength is 0%, the transmittance for 420 nm is 90%, and the transmittance for 440 nm peaks or reaches 100%.

With the synergistic action of the aforesaid near-infrared sharp cut coat and that coating, the transmittance for 400 nm is set at 0%, the transmittance for 420 nm at 80%, the transmittance for 600 nm at 82%, and the transmittance for 700 nm at 2% with the transmittance for 450 nm wavelength peaking at 99%, thereby ensuring more faithful color reproduction.

The low-pass filter LF is made up of three different filter elements stacked one upon another in the optical axis direction, each filter element having crystal axes in directions where, upon projected onto the image plane, the azimuth angle is horizontal (=0°) and ±45° therefrom. Three such filter elements are mutually displaced by a μm in the horizontal direction and by SQRT(1/2) × a in the ± 45° direction for the purpose of moiré control, wherein SQRT means a square root.

The image pickup plane I of a CCD is provided thereon with a complementary colors mosaic filter wherein, as shown in Fig. 14, color filter elements of four colors, cyan, magenta, yellow and green are arranged in a mosaic fashion corresponding to image pickup pixels. More specifically, these four different color filter elements, used in almost equal numbers, are arranged in such a mosaic fashion that neighboring pixels do not correspond to the same type of color filter elements, thereby ensuring more faithful color reproduction.

To be more specific, the complementary colors mosaic filter is composed of at least four different color filter elements as shown in Fig. 14, which should preferably have such characteristics as given below.

Each green color filter element G has a spectral strength peak at a wavelength $G_P$, each yellow filter element $Y_e$ has a spectral strength peak at a wavelength $Y_P$, each cyan filter element C has a spectral strength peak at a wavelength $C_P$, and each magenta filter element M has spectral strength peaks at wavelengths $M_{P1}$ and $M_{P2}$, and these wavelengths satisfy the following conditions.

$$510 \text{ nm} < G_P < 540 \text{ nm}$$
$$5 \text{ nm} < Y_P - G_P < 35 \text{ nm}$$
$$-100 \text{ nm} < C_P - G_P < -5 \text{ nm}$$
$$430 \text{ nm} < M_{P1} < 480 \text{ nm}$$
$$580 \text{ nm} < M_{P2} < 640 \text{ nm}$$

To ensure higher color reproducibility, it is preferred that the green, yellow and cyan filter elements have a strength of at least 80% at 530 nm wavelength with respect to their respective spectral strength peaks, and the magenta filter elements have a strength of 10% to 50% at 530 nm wavelength with their spectral strength peak.

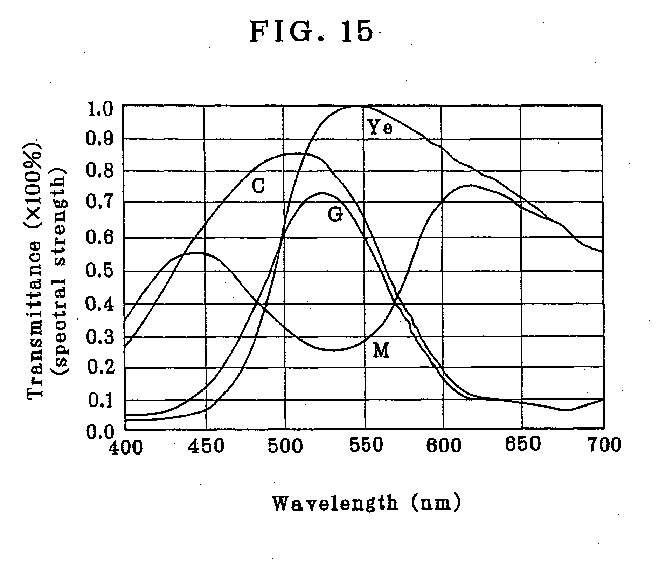

One example of the wavelength characteristics in the aforesaid respective examples is shown in Fig. 15. The green filter element G has a spectral strength peak at 525 nm. The yellow filter element $Y_e$ has a spectral strength peak at 555 nm. The cyan filter element C has a spectral strength peak at 510 nm. The magenta filter element M has peaks at 445 nm and 620 nm. At 530 nm, the respective color filter elements have, with respect to their respective spectral strength peaks, strengths of 99% for G, 95% for $Y_e$, 97% for C and 38% for M.

For such a complementary colors filter, such signal processing as mentioned below is electrically carried out by means of a controller (not shown) (or a controller used with digital cameras).

For luminance signals,

$$Y = |G + M + Y_e + C| \times 1/4$$

For chromatic signals,

$$R - Y = |(M + Y_e) - (G + C)|$$

$$B - Y = |(M + C) - (G + Y_e)|$$

Through this signal processing, the signals from the complementary colors filter are converted into R (red), G (green) and B (blue) signals.

In this regard, it is noted that the aforesaid near-infrared sharp cut coat may be located anywhere on the optical path, and that the number of low-pass filters LF may be either two as mentioned above or one.

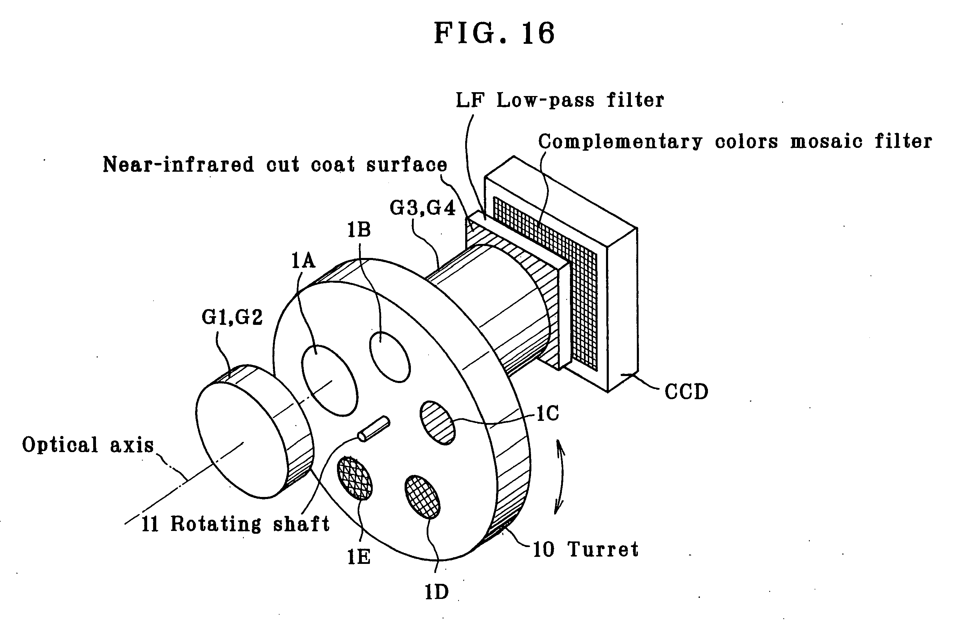

Details of the aperture stop portion in each example are shown in Fig. 16 in conjunction with a four-group arrangement, wherein the first lens group G1 excepting the optical path-bending prism P is shown. At a stop position on the optical axis between the first lens group G1 and the second lens group G2 in the phototaking optical system, there is located a turret 10 capable of brightness control at 0 stage, -1 stage, -2 stage, -3 stage and -4 stage. The turret 10 is composed of an aperture 1A for 0 stage control, which is defined by a circular fixed space of about 4 mm in diameter (with a transmittance of 100% with respect to 550 nm wavelength), an aperture 1B for -1 stage correction, which is defined by a transparent plane-parallel plate having a fixed aperture shape with an aperture area nearly half that of the aperture 1A (with a transmittance of 99% with respect to 550 nm wavelength), and circular apertures 1C, 1D and 1E for -2, -3 and -4 stage corrections, which have the same aperture area as that of the aperture 1B and are provided with ND filters having the respective transmittances of 50%, 25% and 13% with respect to 550 nm wavelength.

By turning of the turret 10 around a rotating shaft 11, any one of the apertures is located at the stop position, thereby controlling the quantity of light.

The turret 10 is also designed that when the effective F-number $F_{no}'$ is $F_{no}' > a/0.4\ \mu m$, an ND filter with a transmittance of less than 80% with respect to 550 nm wavelength is inserted in the aperture. Referring specifically to Example 1, the effective F-number at the telephoto end satisfies the following condition when the effective F-number becomes 9.0 at the -2 stage with respect to the stop-in (0) stage, and the then corresponding aperture is 1C, whereby any image degradation due to a diffraction phenomenon by the stop is prevented.

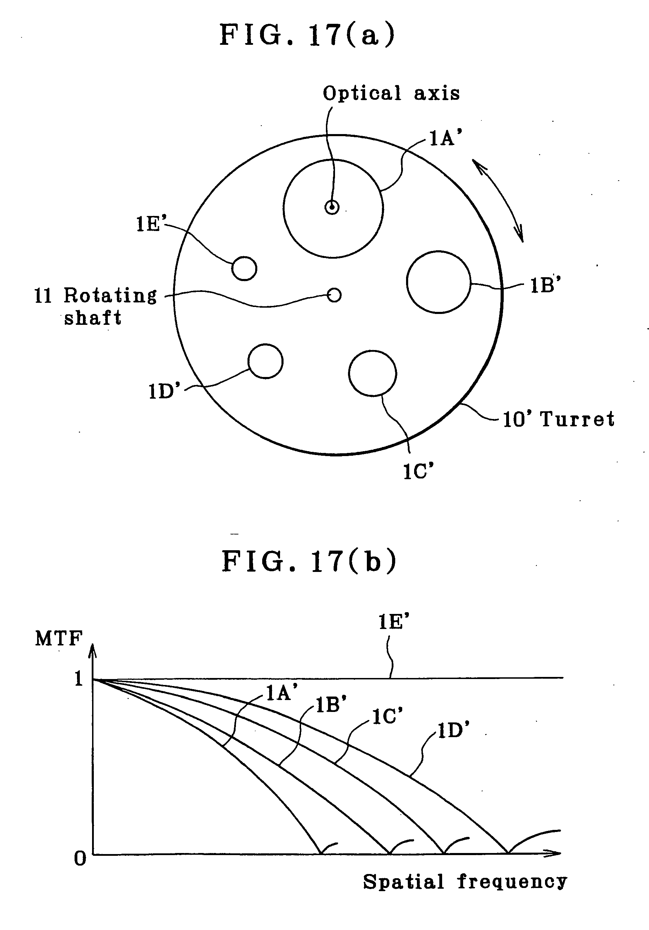

Instead of the turret 10 shown in Fig. 16, it is acceptable to use a turret 10' shown in Fig. 17(a). This turret 10' capable of brightness control at 0 stage, -1 stage, -2 stage, -3 stage and -4 stage is located at the aperture stop position on the optical axis between the first lens group G1 and the second lens group G2 in the phototaking optical system. The turret 10' is composed of an aperture 1A' for 0 stage control, which is defined by a circular fixed space of about 4 mm in diameter, an aperture 1B' for -1 stage correction, which is of a fixed aperture shape with an aperture area nearly half that of the aperture 1A', and apertures 1C', 1D' and 1E' for -2, - 3 and -4 stage corrections, which are of fixed shape with decreasing areas in this order. By turning of the turret 10' around a rotating shaft 11, any one of the apertures is located at the stop position thereby controlling the quantity of light.

Further, optical low-pass filters having varying spatial frequency characteristics are located in association with 1A' to 1D' of plural such apertures. Then, as shown in Fig. 17(b), the spatial frequency characteristics of the optical filters are designed in such a way that as the aperture diameter becomes small, they become high, thereby preventing image degradations due to a diffraction phenomenon by stop-down. Each curve in Fig. 17(b) is indicative of the spatial frequency characteristics of the low-pass filters alone, wherein all the characteristics including diffraction by the stop are set in such a way as to be equal to one another.

Exemplary constructions of the variable mirror that may be used as the reflecting optical system for bending an optical path through the zoom optical system of the invention are now explained.

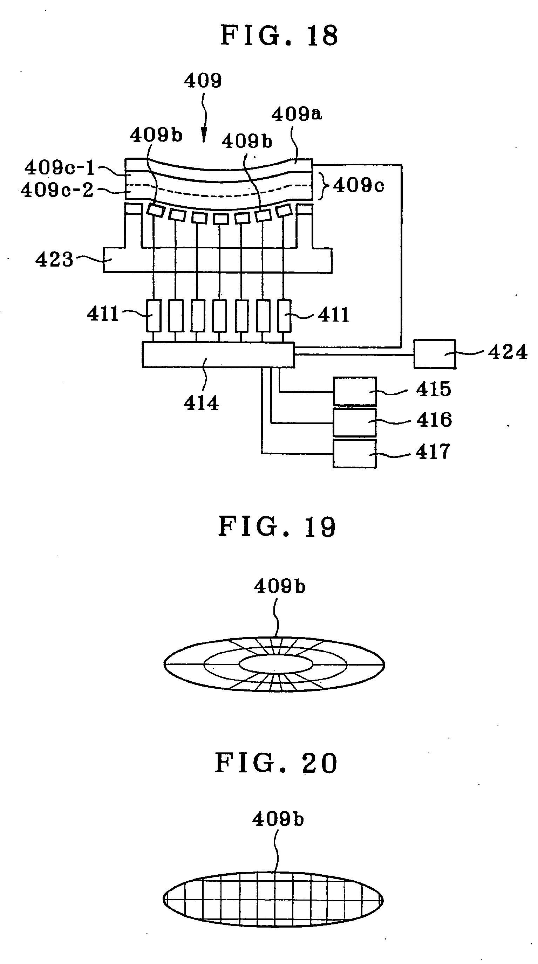

Fig. 18 is illustrative in schematic of one embodiment of a variable-shape mirror 409 that may be used as the reflecting optical element in the zoom lens of the invention.

A basic construction of the mirror 409 having variable optical properties is first explained.

The variable-shape mirror 409 is a mirror having variable optical properties (hereinafter simply called the variable-shape mirror), which comprises a thin film (reflecting surface) 409a prepared as by coating of aluminum and a plurality of electrodes 409b. Reference numeral 411 stands for variable resistors, each connected to each electrode 409b, 414 a computing unit for controlling the resistance values of the variable resistors 411, and 415, 416 and 417 a temperature sensor, a humidity sensor and a distance sensor connected to the computing unit 414, respectively. These components are located as shown to construct a single optical system.

It is here noted that the surface of the variable-shape mirror may be configured not only as a planar surface but also as surfaces of many other shapes, e.g., spherical shape; rotationally symmetric aspheric shape; spherical shape, planar shape, and rotationally symmetric aspheric shape decentered with respect to the optical axis of the optical system; aspheric shape having a symmetric surface; aspheric shape having only one symmetric surface; aspheric shape having no symmetric surface; free-form surface shape; and surface shape having an undifferentiable point or line. Moreover, these surfaces may be configured as reflecting or refracting surfaces. Moreover, any desired reflecting or refracting surface capable of producing some influences on light may be used in the invention. In what follows, these surfaces are generally called an "extended surface".

It is noted that the reflecting surface of the variable-shape mirror should preferably be configured in the form of a free-form surface, because aberrations can be easily and favorably corrected.

It is also noted that the "free-form surface" used herein is defined by the aforesaid equation (a).

In this variable-shape mirror, a piezoelectric element 409c is interposed between a thin film 409a and a plurality of electrodes 409b and the assembly is provided on a supporting member 423, as shown in Fig. 18. By varying the voltage applied on the piezoelectric element 409c for each electrode 409b, the piezoelectric element 409c is elongated and contracted in partially different manners, thereby transforming the thin film 409a. The electrode array 409b may be concentrically divided as shown in Fig. 19 or rectangularly divided as shown in Fig. 20, or alternatively it may have other shape depending on the intended purpose. In Fig. 18, reference numeral 424 is a shake sensor connected to the computing unit 414. For instance, when a digital camera shakes on phototaking, the sensor 424 actuates to sense that shake, thereby varying the voltage applied on the electrode array 409b via the computing unit 414 and variable resistors 411, so that the thin film (reflecting surface) 409a can be transformed for compensation for image blurring due to camera shake. At the same time, consideration is given to signals from the temperature sensor 415, humidity sensor 416 and distance sensor 417 for focusing, and compensation for temperature and humidity changes. Preferably in this case, some thickness and so some strength should be added to the thin film 409a because stresses in association with the transformation of the piezoelectric element 409c are applied on the thin film 409a.

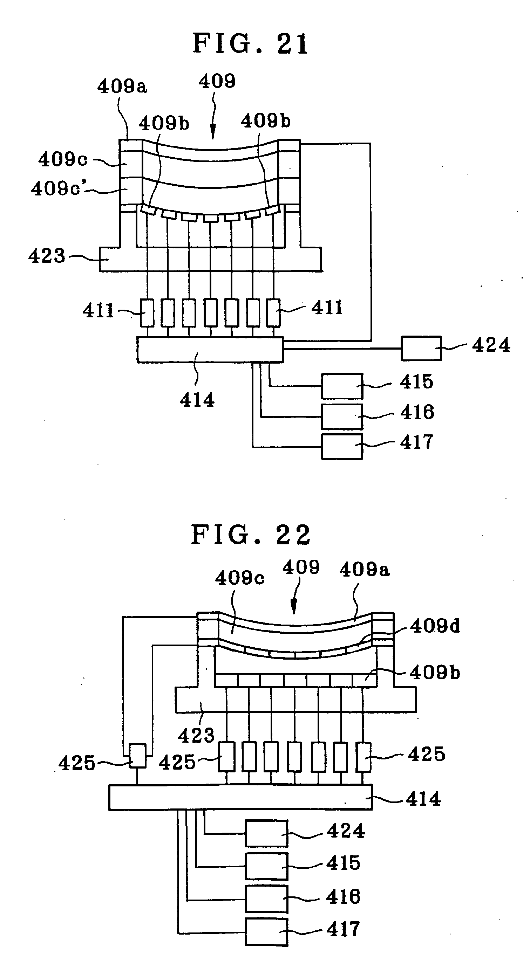

Fig. 21 is illustrative in schematic of another embodiment of the variable-shape mirror 409 that may be used as the reflecting optical element in the zoom optical system of the invention.

This variable-shape mirror is different from the variable-shape mirror shown in Fig. 18 in that the piezoelectric element interposed between the thin film 409a and a plurality of electrodes 409b is made up of two piezoelectric elements 409c and 409c' formed of materials having piezoelectric properties in opposite directions. That is, when the piezoelectric elements 409c and 409c' are formed of ferroelectric crystals, they are located with the orientations of crystallographic axes being in opposite directions. In this case, since the piezoelectric elements 409c and 409c' are elongated and contracted in opposite directions upon receipt of voltages, the force that transforms the thin film 409a (reflecting surface) becomes stronger than that of the embodiment of Fig. 18, resulting in large transformation of the mirror surface.

The piezoelectric element 409c, 409c', for instance, may be formed of piezoelectric materials such as barium titanate, Rochelle salt, quartz, tourmaline, potassium dihydrogenphosphate (KDP), ammonium dihydrogenphosphate (ADP) and lithium niobate, polycrystals and crystals thereof, solid-solution piezoelectric ceramics of $PbZrO_3$ and $PbTiO_3$, organic dielectric materials such as poly(vinyl difluoride)(PVDF), and ferroelectric materials other than the aforesaid materials, among which the organic piezoelectric materials are particularly preferred because of their low Young's modulus and because they can undergo large transformation even at low voltage. It is noted that if these piezoelectric elements are used at an uneven thickness, it is also possible to properly transform the thin film 409a in each of the aforesaid examples.

The piezoelectric element 409c, 409c' may also be formed of polymer piezoelectric materials such as polyurethane, silicone rubber, acryl elastomer, PZT, PLZT, poly(vinylidene fluoride)(PVDF), copolymers such as vinylidene cyanide copolymers and copolymers of vinylidene fluoride and trifluoroethylene.

It is preferable to use organic materials having piezoelectricity, synthetic resins having piezoelectricity, elastomers having piezoelectricity, etc., because it is possible to largely transform the surface of a variable-shape mirror.

It is noted that when the piezoelectric element 409c of Fig. 18 or Fig. 21 is formed of an electrostrictive material such as an acryl elastomer or silicone rubber, it may comprises a substrate 409c-1 laminated on an electrostrictive material 409c-2.

Fig. 22 is illustrative in schematic of yet another embodiment of the variable-shape mirror 409 that may be used as the reflecting optical element in the zoom optical system of the invention.

In this variable-shape mirror, a piezoelectric element 409c is sandwiched between a thin film 409a and an electrode 409d. Then, voltage is applied on the piezoelectric element 409c between the thin film 409a and the electrode 409d via a driving circuit 425 controlled by a computing unit 414. Besides, voltage is applied on a plurality of electrodes 409b provided on a supporting member 423 via the driving circuit 425 controlled by the computing unit 414. Accordingly, the thin film 409a can be subjected to double transformation by the voltage applied between the thin film 409a and the electrode 409d and electrostatic force resulting from the voltage applied on the electrodes 409b, so that much more transformation patterns than could be achieved in any of the aforesaid embodiments can be obtained with faster responsibility.

By varying the sign of the voltage between the thin film 409a and the electrode 409d, it is possible to transform the thin film 409a of the variable-shape mirror into either convex shape or concave shape. In this case, it is acceptable to achieve large transformation using the piezoelectric effect and minute transformation using electrostatic force. It is also acceptable to use mainly the piezoelectric effect for convex transformation and mainly electrostatic force for concave transformation. It is noted that the electrode 409d may be constructed as a single electrode or using a plurality of electrodes as is the case with the electrodes 409b. How the electrode 409d is constructed using a plurality of electrodes is illustrated in Fig. 22. It is understood that the term "piezoelectric effect" used herein includes not only the piezoelectric effect but the electrostrictive effect as well, and the piezoelectric material is understood to include the electrostrictive material, too.

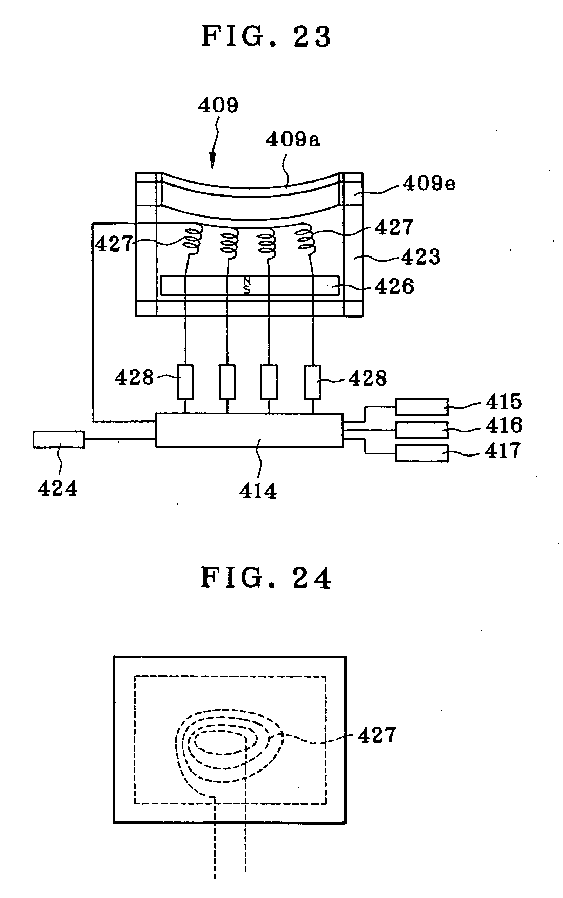

Fig. 23 is illustrative in schematic of yet another embodiment of the variable-shape mirror 409 that may be used as the reflecting optical element in the zoom optical system of the invention.

This variable-shape mirror is designed such that the reflecting surface can be transformed by making use of electromagnetic force. A permanent magnet 426 is fixed on the inside bottom of a support frame 423, and the peripheral portion of a substrate 409e formed of silicon nitride, polyimide or the like is fixedly placed on top of that frame. In addition, a thin film 409a formed as by coating of aluminum or the like is provided on the surface of the substrate 409e, so that the variable-shape mirror 409 is set up. The substrate 409e is fixedly provided on its lower surface with a plurality of coils 427 that are connected to a computing unit 414 via the respective driving circuits 428. In response to output signals from the computing unit 414, which correspond to changes in the optical system which changes are determined in the computing unit 414 by signals from the respective sensors 415, 416, 417 and 424, suitable currents are fed to the respective coils 427 through the respective driving circuits 428, whereupon the respective coils 427 are repulsed or adsorbed by electromagnetic force exerted between them and the permanent magnet 426, so that the substrate 409e and thin film 409a can be transformed.

In this case, it is acceptable to pass varying amounts of currents through the respective coils 427, or use a single coil 427. Alternatively, the permanent magnet 426 may be provided on the lower surface of the substrate 409e while the coils 427 may be provided on the inside bottom of the support frame 423. Preferably, the coils 427 should be designed as thin-film coils as by lithography. The coils 427 may also have therein cores formed of ferromagnetic materials.

The thin-film coil 427 may also be designed in such a way as to have a turn density that varies depending on site, as shown in Fig. 24, thereby imparting the desired transformation to the substrate 409e and thin-film 409a. The coil 472 may be used in the form of a single coil or may have therein a core of ferromagnetic material.

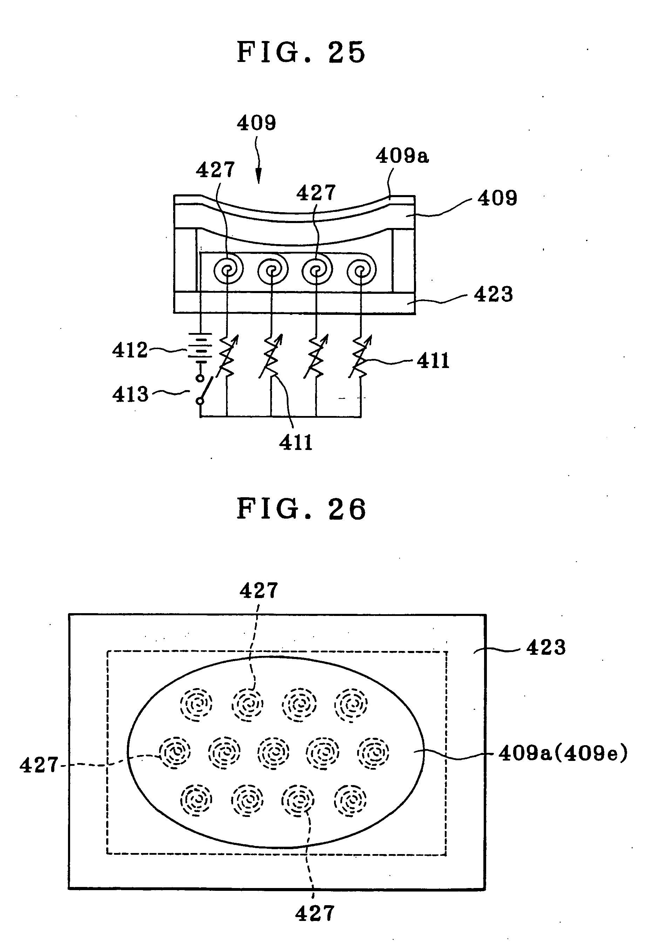

Fig. 25 is illustrative in schematic of a further embodiment of the variable-shape mirror 409 that may be used as the reflecting optical element in the zoom optical system of the invention.

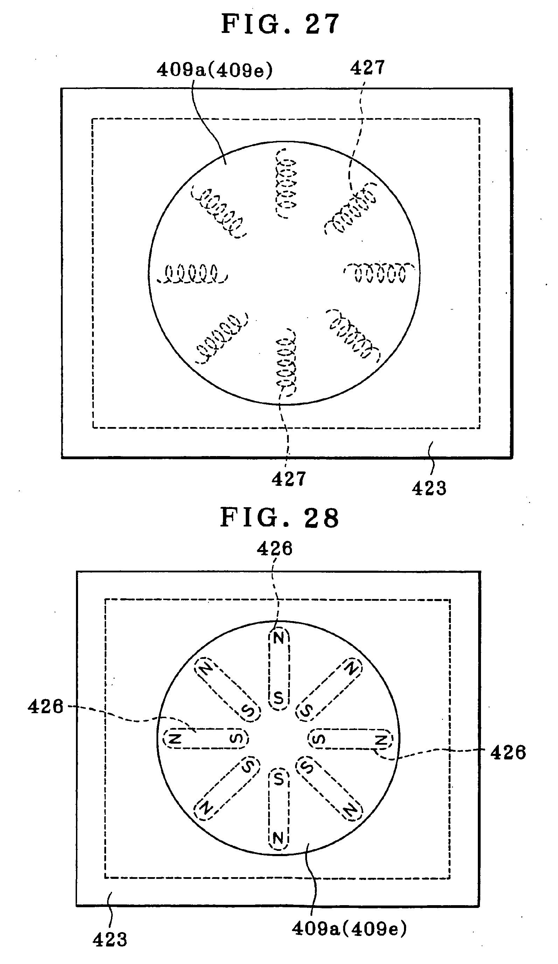

In this variable-shape mirror, a substrate 409e is formed of iron or other ferromagnetic material, and a thin film 409a functioning as a reflecting film is formed of aluminum or the like. In this case, since it is unnecessary to provide the thin-film coils on the substrate 409e, the variable-shape mirror can be simplified in construction and so can be fabricated at low costs. If a power source switch 413 is replaced by a combined changeover and open/close switch, the directions of currents passing through the coils 427 can be so changed that the shape of the substrate 409e and thin film 409a can be changed without restraint. Fig. 26 shows one example of how to locate the coils 427, and Fig. 11 shows another example of how to locate the coils 427. These locations may also be applied to the example of Fig. 23. Fig. 23 illustrates the locations of the permanent magnets 426 well fit for the case where the coils 427 are radially located as shown in Fig. 27. That is, if the permanent magnets 426 are radially located, more delicate transformation than could be achieved in the example of Fig. 23 can then be imparted to the substrate 409e and thin film 409a. Such transformation of the substrate 409e and thin film 409a by electromagnetic force (the examples of Figs. 23 and 25) has a merit over transformation by electrostatic force in that the driving voltage can be much more reduced.

The variable-shape mirror has been described with reference to some examples of the variable-shape mirror. For transformation of the mirror, however, it is acceptable to make use of two or more forces, as exemplified in Fig. 22. In short, it is acceptable to transform the variable-shape mirror by simultaneous use of at least two of electrostatic force, electromagnetic force, piezoelectric effect, electrostriction, fluid pressure, magnetic field, temperature change, electromagnetic waves, etc. That is, if an optical element having variable optical properties is fabricated with two or more different driving methods, large transformation and fine transformation are then achievable at the same time and, hence, a mirror surface with satisfactory precision is achievable.

The present electronic imaging system constructed as described above may be applied to phototaking systems where object images formed through zoom lenses are received at image pickup devices such as CCDs or silver-halide films, inter alia, digital cameras or video cameras as well as PCs and telephone sets which are typical information processors, in particular, easy-to-carry cellular phones. Given below are some such embodiments.

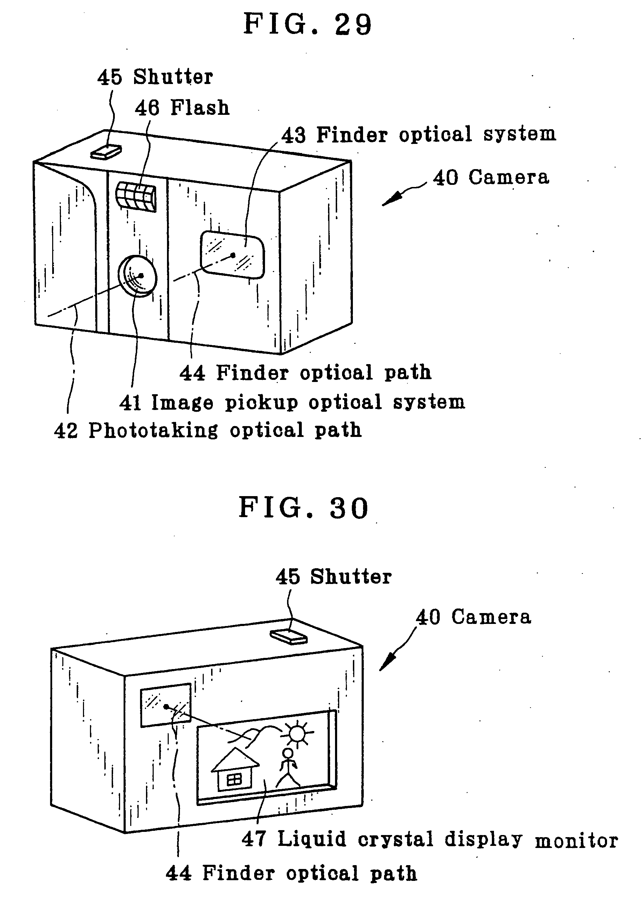

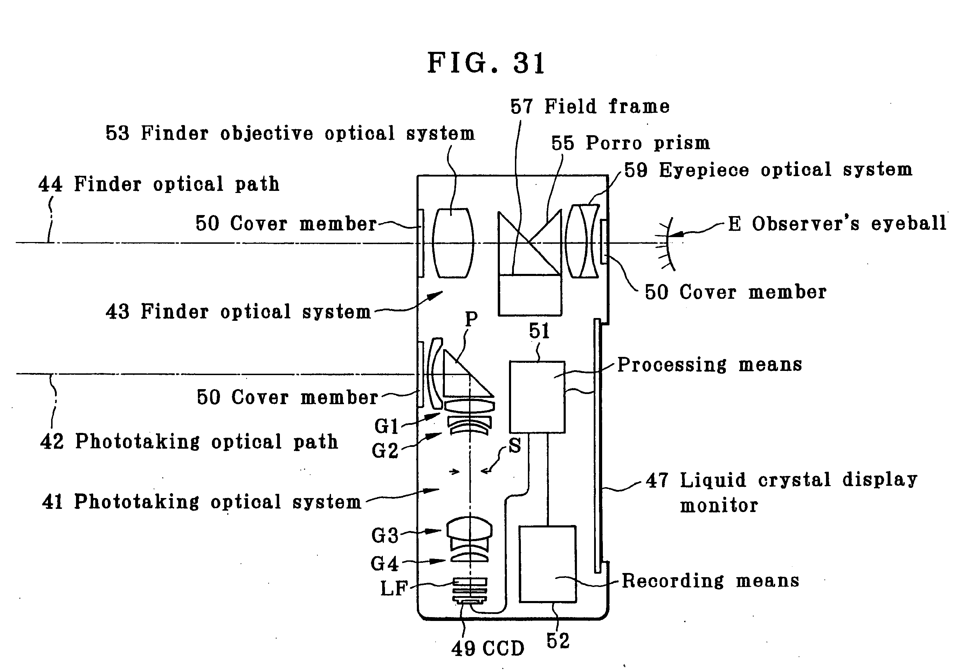

Figs. 29, 30 and 31 are conceptual illustrations of a phototaking optical system 41 for digital cameras, in which the zoom lens of the present invention is built. Fig. 29 is a front perspective view of the appearance of a digital camera 40, and Fig. 30 is a rear perspective view of the same. Fig. 31 is a horizontally sectional view of the construction of the digital camera 40. In this embodiment, the digital camera 40 comprises a phototaking optical system 41 including a phototaking optical path 42, a finder optical system 43 including a finder optical path 44, a shutter 45, a flash 46, a liquid crystal monitor 47 and so on. As the shutter 45 mounted on the upper portion of the camera 40 is pressed down, phototaking takes place through the phototaking optical system 41, for instance, the optical path-bending zoom lens according to Example 1. In this case, the optical path is bent by an optical path-bending prism P in the longitudinal direction of the digital camera 40, i.e., in the lateral direction so that the camera can be slimmed down. An object image formed by the phototaking optical system 41 is formed on the image pickup plane of a CCD 49 via a near-infrared cut filter and an optical low-pass filter LF. The object image received at CCD 49 is shown as an electronic image on the liquid crystal monitor 47 via processing means 51, which monitor is mounted on the back of the camera. This processing means 51 is connected with recording means 52 in which the phototaken electronic image may be recorded. It is here noted that the recording means 52 may be provided separately from the processing means 51 or, alternatively, it may be constructed in such a way that images are electronically recorded and written therein by means of floppy discs, memory cards, MOs or the like. This camera may also be constructed in the form of a silver halide camera using a silver halide film in place of CCD 49.

Moreover, a finder objective optical system 53 is located on the finder optical path 44. An object image formed by the finder objective optical system 53 is in turn formed on the field frame 57 of a Porro prism 55 that is an image erecting member. In the rear of the Porro prism 55 there is located an eyepiece optical system 59 for guiding an erected image into the eyeball E of an observer. It is here noted that cover members 50 are provided on the entrance sides of the phototaking optical system 41 and finder objective optical system 53 as well as on the exit side of the eyepiece optical system 59.

With the thus constructed digital camera 40, it is possible to achieve high performance and cost reductions, because the phototaking optical system 41 is constructed of a fast zoom lens having a high zoom ratio at the wide-angle end with satisfactory aberrations and a back focus large enough to receive a filter, etc. therein. In addition, the camera can be slimmed down because, as described above, the optical path of the zoom lens is selectively bent in the longitudinal direction of the digital camera 40. With the optical path bent in the thus selected direction, the flash 46 is positioned above the entrance surface of the phototaking optical system 42, so that the influences of shadows on strobe shots of figures can be slackened.

In the embodiment of Fig. 31, plane-parallel plates are used as the cover members 50; however, it is acceptable to use powered lenses. It is understood that depending on ease of camera's layout, the optical path can be bent in either one of the longitudinal and lateral directions.

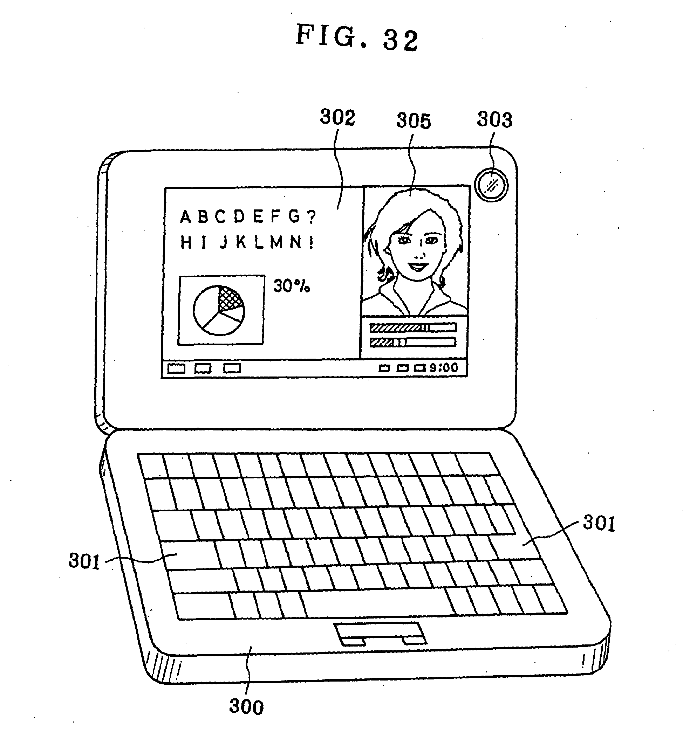

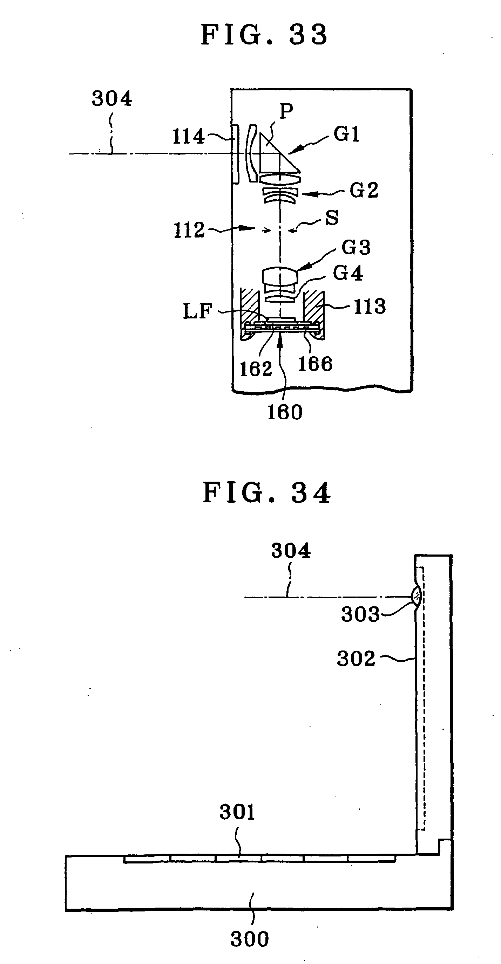

Figs. 32, 33 and 34 are illustrative of a personal computer that is one example of the information processor in which the image-formation optical system of the present invention is built as an objective optical system. Fig. 32 is a front perspective view of a personal computer 300 with a cover opened, Fig. 33 is a sectional view of a phototaking optical system 303 in the personal computer 300, and Fig. 34 is a side view of the state of Fig. 32. As shown in Figs. 32, 33 and 34, the personal computer 300 comprises a keyboard 301 via which an operator enters information therein from outside, information processing or recording means (not shown), a monitor 302 on which the information is shown for the operator, and a phototaking optical system 303 for taking an image of the operator and surrounding images. For the monitor 302, use may be made of a transmission type liquid crystal display device illuminated by backlight (not shown) from the back surface, a reflection type liquid crystal display device in which light from the front is reflected to show images, or a CRT display device. While the phototaking optical system 303 is shown as being built in the right-upper portion of the monitor 302, it may be located somewhere around the monitor 302 or keyboard 301.

This phototaking optical system 303 comprises on a phototaking optical path 304 an objective lens 112 such as one represented by Example 1 of the optical path-bending zoom lens according to the invention and an image pickup device chip 162 for receiving an image. There are built in the personal computer 300.

Here an optical low-pass filter LF is additionally applied onto the image pickup device chip 162 to form an integral imaging unit 160, which can be fitted into the rear end of a lens barrel 113 of the objective lens 112 in one-touch operation. Thus, the assembly of the objective lens 112 and image pickup device chip 162 is facilitated because of no need of alignment or control of surface-to-surface spacing. The lens barrel 113 is provided at its end (not shown) with a cover glass 114 for protection of the objective lens 112. It is here noted that driving mechanisms for the zoom lens, etc. contained in the lens barrel 113 are not shown.

An object image received at the image pickup device chip 162 is entered via a terminal 166 in the processing means of the personal computer 300, and displayed as an electronic image on the monitor 302. As an example, an image 305 taken of the operator is shown in Fig. 32. This image 305 may be displayed on a personal computer at the other end via suitable processing means and the Internet or telephone line.

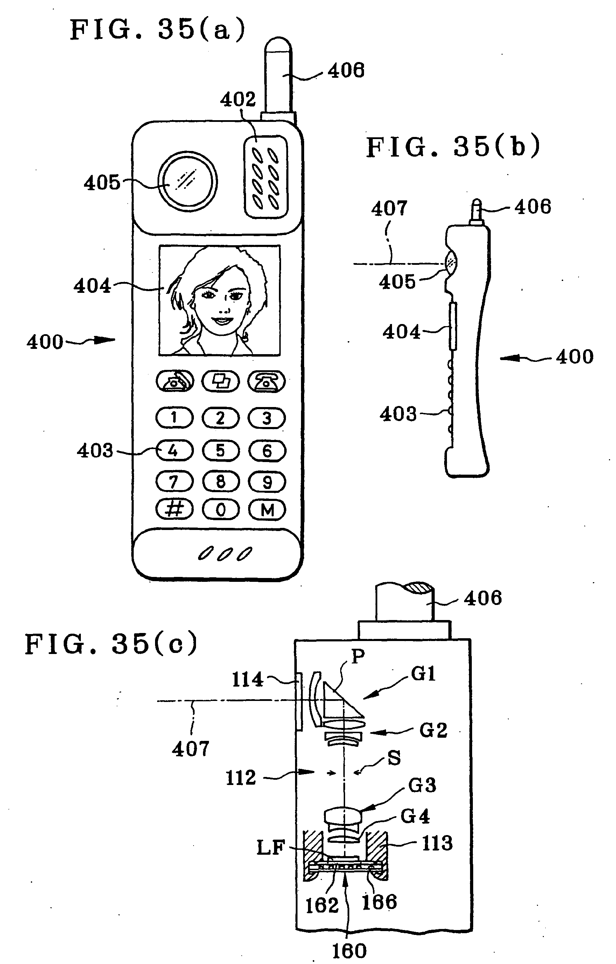

Figs. 35(a), 35(b) and 35(c) are illustrative of a telephone set that is one example of the information processor in which the image-formation optical system of the present invention is built in the form of a phototaking optical system, especially a convenient-to-carry cellular phone. Fig. 35(a) and Fig. 35(b) are a front and a side view of a cellular phone 400, respectively, and Fig. 35(c) is a sectional view of a phototaking optical system 405. As shown in Figs. 35(a), 35(b) and 35(c), the cellular phone 400 comprises a microphone 401 for entering the voice of an operator therein as information, a speaker 402 for producing the voice of the person at the other end, an input dial 403 via which the operator enters information therein, a monitor 404 for displaying an image taken of the operator or the person at the other end and indicating information such as telephone numbers, a phototaking optical system 405, an antenna 406 for transmitting and receiving communication waves, and processing means (not shown) for processing image information, communication information, input signals, etc. Here the monitor 404 is a liquid crystal display device. It is noted that the components are not necessarily arranged as shown. The phototaking optical system 405 comprises on a phototaking optical path 407 an objective lens 112 such as one represented by the optical path-bending zoom lens of Example 1 according to the invention and an image pickup device chip 162 for receiving an object image. These are built in the cellular phone 400.

Here an optical low-pass filter LF is additionally applied onto the image pickup device chip 162 to form an integral imaging unit 160, which can be fitted into the rear end of a lens barrel 113 of the objective lens 112 in one-touch operation. Thus, the assembly of the objective lens 112 and image pickup device chip 162 is facilitated because of no need of alignment or control of surface-to-surface spacing. The lens barrel 113 is provided at its end (not shown) with a cover glass 114 for protection of the objective lens 112. It is here noted that driving mechanisms for the zoom lens, etc. contained in the lens barrel 113 are not shown.

An object image received at the image pickup device chip 162 is entered via a terminal 166 in processing means (not shown), so that the object image can be displayed as an electronic image on the monitor 404 and/or a monitor at the other end. The processing means also include a signal processing function for converting information about the object image received at the image pickup device chip 162 into transmittable signals, thereby sending the image to the person at the other end.


INDUSTRIAL POSSIBILITIES

The present invention provides a zoom lens that is well received at a collapsible lens mount with reduced thickness, has a high zoom ratio and shows excellent image-formation capability even upon rear-focusing. With this zoom lens, it is possible to thoroughly slim down video cameras or digital cameras.

According to the invention, the reflecting optical element such as a mirror is inserted in the object side of an optical system, especially a zoom lens system to bend an optical path (an optical axis) with various contrivances, thereby achieving a zoom lens that enables a camera to be immediately placed in operation with no startup time unlike a collapsible lens mount while the highest possible optical specifications such as high zoom ratios, wide angles of view, small F-numbers and limited aberrations, and is well fit for waterproof and dustproof purposes. It is thus possible to achieve a camera whose depth dimension is minimized. If mechanisms including a stop and shutter are designed to stay invariable, it is then possible to achieve further reductions of the depth dimension.

**Claims**

1. A zoom lens, comprising, in order from an object side thereof, a lens group A that comprises a negative lens and a reflecting optical element (P) for bending an optical path and remains fixed during zooming, a lens group B that moves in only one direction during zooming from a wide-angle end to a telephoto end of the zoom lens, and an aperture stop (S) wherein the aperture stop (S) stays invariable in position during zooming, **characterized in that** the following condition (31) is satisfied:

$$0.45 < \log \gamma_B / \log \gamma < 0.85 \qquad (31)$$

where $\gamma$ is fT/fW where fW and fT are focal lengths of the zoom lens at the wide-angle end and the telephoto end, respectively, and $\gamma B$ is a magnification of the lens group B at the telephoto end/a magnification of the lens group B at the wide-angle end, wherein the zoom lens comprises a lens group located on an image side of the zoom lens with respect to said aperture stop (S), wherein said lens group moves in only one direction during zooming from the wide-angle end to the telephoto end.

2. The zoom lens according to claim 1, **characterized in that** said lens group A is composed of a subgroup A1 comprising a negative meniscus lens convex on an object side thereof, the reflecting optical element (P) for bending an optical path, and a subgroup A2 comprising at least a positive lens.

3. The zoom lens according to claim 1 or claim 2, **characterized in that** focusing is carried out with any one of the lens groups located on the image side with respect to said aperture stop (S).

4. The zoom lens according to any one of claims 1 to 3, **characterized in that** all the lens groups having positive refracting power comprise an aspheric surface.

5. The zoom lens according to any one of claims 1 to 4, **characterized in that** all the lens groups having positive refracting power comprise a cemented lens component.

6. The zoom lens according to any one of claims 1 to 5, **characterized in that** all the lens groups having positive refracting power consist of one cemented lens component.

7. The zoom lens according to any one of claims 1 to 6, **characterized in that** the reflecting optical element (P) for bending an optical path is composed of a prism block that satisfies the following medium condition (32):

$$1.55 < n_{pri} < 1.97 \qquad (32)$$

where npri is a d-line refractive index of a prism block medium.

8. The zoom lens according to claim 7, **characterized in that** said prism block satisfies the following condition (33):

$$0.5 < d/L < 1.2 \qquad (33)$$

where d is an air-based length from a light beam-entrance surface to a light beam-exit surface of the prism block as measured along an optical axis of the zoom lens, and L is a diagonal length of an effective image pickup area of an image pickup device.

9. The zoom lens according to any one of claims 2 to 8, **characterized in that** a composite magnification of the lens group B and subsequent lens groups at the telephoto end satisfies the following condition:

$$0.75 < -\beta_{Rt} < 1.5 \qquad (34)$$

where βRt is a composite magnification of the lens group B and subsequent lens groups at the telephoto end (an infinite-distance object point).

10. The zoom lens according to claim 2, **characterized in that** the subgroup A2 of said lens group A is composed of two lenses inclusive of, in order from an object side thereof, a positive lens and a negative lens, and satisfies the following condition:

$$-0.3 < L/f_{12} < 0 \qquad (37)$$

where f12 is a focal length of the subgroup A2 of the lens group A, and L is a diagonal length of an effective image pickup area of an image pickup device (CCD).

11. The zoom lens according to claim 2 or claim 10, **characterized in that** said lens group A satisfies the following conditions:

$$0.5 < (R_{11F} + R_{11R})/(R_{11F} - R_{11R}) < 4.5 \qquad (38)$$

$$0 < f_{11}/f_{12} < 0.8 \qquad (39)$$

where R11F and R11R are axial radii of curvature of object-side and image-side surfaces of the negative lens in the subgroup A1 of the lens group A, respectively, and f11 and f12 are focal lengths of the subgroups A1 and A2 of the lens group A, respectively.

12. The zoom lens according to claim 1, **characterized in that** said lens group A is composed of a subgroup A1 comprising the negative lens, the reflecting optical element (P) for bending an optical path, and a subgroup A2 comprising at least a positive lens and satisfies the following conditions (38):

$$0.5 < (R_{11F} + R_{11R})/(R_{11F} - R_{11R}) < 4.5 \qquad (38)$$

$$0 < f_{11}/f_{12} < 0.8 \qquad (39)$$

where R11F and R11R are axial radii of curvature of object-side and image-side surfaces of the negative lens in the subgroup A1 of the lens group A, respectively, and f11 and f12 are focal lengths of the subgroups A1 and A2 of the lens group A, respectively.

13. The zoom lens according to any one of claims 1 to 12, **characterized in that** the reflecting optical element (P) for bending an optical path is composed of a variable-shape mirror having a controllable shape.

14. An electronic imaging system, **characterized by** comprising the zoom lens according to any one of claims 1 to 13, and an electronic image pickup device (CCD) located on an image side thereof.


**Patentansprüche**

1. Zoomobjektiv, umfassend, der Reihe nach von dessen Gegenstandsseite, eine Linsengruppe A, welche eine Zerstreuungslinse und ein reflektierendes optisches Element (P) zum Umlenken eines optischen Pfads umfasst, und während des Zoomens fest bleibt, eine Linsengruppe B, welche sich während des Zoomens nur in einer Richtung von einem Weitwinkel-Ende zu einem Tele-Ende des Zoomobjektivs bewegt, und eine Aperturblende (S), wobei die Aperturblende (S) während des Zoomens unverändert in Position bleibt, **dadurch gekennzeichnet, dass** die folgende Bedingung (31) erfüllt ist:

$$0.45 < \log \gamma_B / \log \gamma < 0.85 \qquad (31)$$

wobei $\gamma$ gleich $f_T/f_W$ ist, wobei fw und $f_T$ Brennweiten des Zoomobjektivs an dem Weitwinkel-Ende bzw. dem Tele-Ende sind, und $\gamma_B$ ein Abbildungsmaßstab der Linsengruppe B an dem Tele-Ende/ein Abbildungsmaßstab der Linsengruppe B an dem Weitwinkel-Ende ist, wobei das Zoomobjektiv eine Linsengruppe umfasst, welche sich in Bezug auf die Aperturblende (S) auf einer Bildseite des Zoomobjektivs befindet, wobei sich die Linsengruppe während des Zoomens nur in einer Richtung von dem Weitwinkel-Ende zu dem Tele-Ende bewegt.

2. Zoomobjektiv nach Anspruch 1, **dadurch gekennzeichnet, dass** die Linsengruppe A zusammengesetzt ist aus einer Untergruppe A1, welche eine negative Meniskuslinse umfasst, welche auf dessen Gegenstandsseite konvex ist, dem reflektierenden optischen Element (P) zum Umlenken eines optischen Pfads; und einer Untergruppe A2, welche wenigstens eine Sammellinse umfasst.

3. Zoomobjektiv nach Anspruch 1 oder Anspruch 2, **dadurch gekennzeichnet, dass** das Fokussieren mit einer der Linsengruppen ausgeführt wird, welche sich in Bezug auf die Aperturblende (S) auf der Bildseite befindet.

4. Zoomobjektiv nach einem der Ansprüche 1 bis 3, **dadurch gekennzeichnet, dass** sämtliche Linsengruppen, welche eine positive Brechkraft aufweisen, eine asphärische Oberfläche umfassen.

5. Zoomobjektiv nach einem der Ansprüche 1 bis 4, **dadurch gekennzeichnet, dass** sämtliche Linsengruppen, welche eine positive Brechkraft aufweisen, eine verkittete Linsenkomponente umfassen.

6. Zoomobjektiv nach einem der Ansprüche 1 bis 5, **dadurch gekennzeichnet, dass** sämtliche Linsengruppen, welche eine positive Brechkraft aufweisen, aus einer verkitteten Linsenkomponente bestehen.

7. Zoomobjektiv nach einem der Ansprüche 1 bis 6, **dadurch gekennzeichnet, dass** das reflektierende optische Element (P) zum Umlenken eines optisches Pfads aus einem Prismablock zusammengesetzt ist, welcher die folgende Mediumsbedingung (32) erfüllt:

$$1.55 < n_{pri} < 1.97 \qquad (32)$$

wobei $n_{pri}$ ein d-Linie-Brechnungsindex eines Prismablockmediums ist.

8. Zoomobjektiv nach Anspruch 7, **dadurch gekennzeichnet, dass** der Prismablock die folgende Bedingung (33) erfüllt:

$$0.5 < d/L < 1.2 \qquad (33)$$

wobei d eine Luft-basierte Länge von einer Lichtstrahleintrittsoberfläche zu einer Lichtstrahlaustrittsoberfläche des Prismablocks ist, gemessen entlang einer optischen Achse des Zoomobjektivs, und L eine diagonale Länge eines effektiven Bildaufnahmebereichs einer Bildaufnahmevorrichtung ist.

9. Zoomobjektiv nach einem der Ansprüche 2 bis 8, **dadurch gekennzeichnet, dass** ein zusammengesetzter Abbildungsmaßstab der Linsengruppe B und nachfolgender Linsengruppen an dem Tele-Ende die folgende Bedingung erfüllt:

$$0.75 < -\beta_{Rt} < 1.5 \qquad (34)$$

wobei $\beta_{Rt}$ ein zusammengesetzter Abbildungsmaßstab der Linsengruppe B und nachfolgender Linsengruppen an dem Tele-Ende (ein unendlich weit entfernter Gegenstandspunkt) ist.

10. Zoomobjektiv nach Anspruch 2, **dadurch gekennzeichnet, dass** die Untergruppe A2 der Linsengruppe A aus zwei Linsen, einschließlich, der Reihe nach von dessen Gegenstandsseite, einer Sammellinse und einer Zerstreuungslinse, zusammengesetzt ist und die folgende Bedingung erfüllt:

$$-0.3 < L/f_{12} < 0 \qquad (37)$$

wobei $f_{12}$ eine Brennweite der Untergruppe A2 der Linsengruppe A ist, und L eine diagonale Länge eines effektiven Bildaufnahmebereichs einer Bildaufnahmevorrichtung (CCD) ist.

11. Zoomobjektiv nach Anspruch 2 oder Anspruch 10, **dadurch gekennzeichnet, dass** die Linsengruppe A die folgenden Bedingungen erfüllt:

$$0.5 < (R_{11F}+R_{11R})/ (R_{11F}-R_{11R}) < 4.5 \qquad (38)$$

$$0 < f_{11}/f_{12} < 0.8 \qquad (39)$$

wobei $R_{11F}$ und $R_{11R}$ axiale Krümmungsradien von gegenstandsseitigen bzw. bildseitigen Oberflächen der Zerstreuungslinse der Untergruppe A1 der Linsengruppe A sind, und $f_{11}$ und $f_{12}$ Brennweiten der Untergruppen A1 bzw. A2 der Linsengruppe A sind.

12. Zoomobjektiv nach Anspruch 1, **dadurch gekennzeichnet, dass** die Linsengruppe A aus einer Untergruppe A1, welche die Zerstreuungslinse umfasst, dem reflektierenden optischen Element (P) zum Umlenken eines optischen Pfads und einer Untergruppe A2, welche wenigstens eine Sammellinse umfasst, zusammengesetzt ist und die folgenden Bedingungen (38) erfüllt:

$$0.5 < (R_{11F}+R_{11R})/ (R_{11F}-R_{11R}) < 4.5 \qquad (38)$$

$$0 < f_{11}/f_{12} < 0.8 \qquad (39)$$

wobei $R_{11F}$ und $R_{11R}$ axiale Krümmungsradien von gegenstandsseitigen bzw. bildseitigen Oberflächen der Zerstreuungslinse der Untergruppe A1 der Linsengruppe A sind, und $f_{11}$ und $f_{12}$ Brennweiten der Untergruppen A1 bzw. A2 der Linsengruppe A sind.

13. Zoomobjektiv nach einem der Ansprüche 1 bis 12, **dadurch gekennzeichnet, dass** das reflektierende optische Element (P) zum Umlenken eines optischen Pfads aus einem formvariablen Spiegel, welcher eine steuerbare/regelbare Form aufweist, zusammengesetzt ist.

14. Elektronisches Abbildungssystem, **dadurch gekennzeichnet, dass** es das Zoomobjektiv nach einem der Ansprüche 1 bis 13, und eine elektronische Bildaufnahmevorrichtung (CCD), welche sich auf dessen Bildseite befindet, umfasst.

**Revendications**

1. Objectif zoom, comprenant, dans cet ordre en partant d'un côté objet, un groupe de lentilles A qui comprend une lentille divergente et un élément optique réfléchissant (P) pour courber un chemin optique et reste fixe pendant le zoom, un groupe de lentilles B qui se déplace dans une seule direction pendant le zoom d'une extrémité grand-angle vers une extrémité téléobjectif de l'objectif zoom, et un diaphragme (S), dans lequel le diaphragme (S) reste dans une position invariable pendant le zoom, **caractérisé en ce que** la condition suivante (31) est satisfaite :

$$0.45 < \log \gamma_{B} / \log \gamma < 0.85 \qquad (31)$$

où $\gamma$ est fT / fW où fW et fT sont respectivement des longueurs focales de l'objectif zoom à l'extrémité grand-angle et à l'extrémité téléobjectif, et $\gamma B$ est un grandissement du groupe de lentilles B à l'extrémité téléobjectif / un grandissement du groupe de lentilles B à l'extrémité grand-angle, dans lequel l'objectif zoom comprend un groupe de lentilles placé sur un côté image de l'objectif zoom par rapport audit diaphragme (S), dans lequel ledit groupe de lentilles bouge dans une seule direction pendant le zoom de l'extrémité grand-angle vers l'extrémité téléobjectif.

2. Objectif zoom selon la revendication 1, **caractérisé en ce que** ledit groupe de lentilles A est composé d'un sous-groupe A1 comprenant une lentille ménisque divergent convexe sur un côté objet, l'élément optique réfléchissant (P) pour courber un chemin optique, et d'un sous-groupe A2 comprenant au moins une lentille convergente.

3. Objectif zoom selon la revendication 1 ou la revendication 2, **caractérisé en ce qu'**une mise au point est exécutée avec l'un quelconque des groupes de lentilles placés sur le côté image par rapport audit diaphragme (S).

4. Objectif zoom selon l'une quelconque des revendications 1 à 3, **caractérisé en ce que** tous les groupes de lentilles ayant une puissance réfringente positive comprennent une surface asphérique.

5. Objectif zoom selon l'une quelconque des revendications 1 à 4, **caractérisé en ce que** tous les groupes de lentilles ayant une puissance réfringente positive comprennent un élément d'objectif collé.

6. Objectif zoom selon l'une quelconque des revendications 1 à 5, **caractérisé en ce que** tous les groupes de lentilles ayant une puissance réfringente positive se composent d'un seul élément d'objectif collé.

7. Objectif zoom selon l'une quelconque des revendications 1 à 6, **caractérisé en ce que** l'élément optique réfléchissant (P) pour courber un chemin optique est composé d'un bloc de prismes qui satisfait à la condition de support suivante (32) :

$$1.55 < n_{pri} < 1.97 \qquad (32)$$

où npri est un indice de réfraction de raie D d'un support de bloc de prismes.

8. Objectif zoom selon la revendication 7, **caractérisé en ce que** ledit bloc de prismes qui satisfait à la condition suivante (33) :

$$0.5 < d/L < 1.2 \qquad (33)$$

où d est une longueur dans l'air depuis une surface d'entrée de faisceau lumineux jusqu'à une surface de sortie de faisceau lumineux du bloc de prismes mesurée le long d'un axe optique de l'objectif zoom, et L est une longueur en diagonale d'une zone effective de prise de vue d'un dispositif de prise de vue.

9. Objectif zoom selon l'une quelconque des revendications 2 à 8, **caractérisé en ce qu'**un grandissement composite du groupe de lentilles B et des groupes de lentilles suivants à l'extrémité téléobjectif satisfait à la condition suivante :

$$0.75 < -\beta_{Rt} < 1.5 \qquad (34)$$

où $\beta_{Rt}$ est un grandissement composite du groupe de lentilles B et des groupes de lentilles suivants à l'extrémité téléobjectif (point du côté objet à l'infini).

10. Objectif zoom selon la revendication 2, **caractérisé en ce que** le sous-groupe A2 dudit groupe de lentilles A est composé de deux lentilles incluant, dans cet ordre en partant d'un côté objet, une lentille convergente et une lentille divergente, et satisfait à la condition suivante :

$$-0.3 < L/f_{12} < 0 \qquad (37)$$

où f12 est une longueur focale du sous-groupe A2 du groupe de lentilles A, et L est une longueur en diagonale d'une zone effective de prise de vue d'un dispositif de prise de vue (CCD).

11. Objectif zoom selon la revendication 2 ou la revendication 10, **caractérisé en ce que** ledit groupe de lentilles A satisfait aux conditions suivantes :

$$0.5 < (R_{11F} + R_{11R}) / (R_{11F} - R_{11R}) < 4.5 \qquad (38)$$

$$0 < f_{11} / f_{12} < 0.8 \qquad (39)$$

où R11F et R11R sont respectivement des rayons axiaux de courbure de surfaces côté objet et côté image de la lentille divergente dans le sous-groupe A1 du groupe de lentilles A, et f11 et f12 sont respectivement des longueurs focales des sous-groupes A1 et A2 du groupe de lentilles A.

12. Objectif zoom selon la revendication 1, **caractérisé en ce que** ledit groupe de lentilles A est composé d'un sous-groupe A1 comprenant la lentille divergente, l'élément optique réfléchissant (P) pour courber un chemin optique, et d'un sous-groupe A2 comprenant au moins une lentille convergente et satisfait aux conditions suivantes (38) :

$$0.5 < (R_{11F} + R_{11R}) / (R_{11F} - R_{11R}) < 4.5 \qquad (38)$$

$$0 < f_{11} / f_{12} < 0.8 \qquad (39)$$

où R11F et R11R sont respectivement des rayons axiaux de courbure de surfaces côté objet et côté image de la lentille divergente dans le sous-groupe A1 du groupe de lentilles A, et f11 et f12 sont respectivement des longueurs focales des sous-groupes A1 et A2 du groupe de lentilles A.

13. Objectif zoom selon l'une quelconque des revendications 1 à 12, **caractérisé en ce que** l'élément optique réfléchissant (P) pour courber un chemin optique est composé d'un miroir de forme variable ayant une forme contrôlable.

14. Système électronique de reproduction d'image, **caractérisé en ce qu'**il comprend l'objectif zoom selon l'une quelconque des revendications 1 à 13, et un dispositif électronique de prise de vue (CCD) placé sur un côté image.

# FIG. 1(a)

# FIG. 1(b)

# FIG. 1(c)

# FIG. 2(a)

# FIG. 2(b)

# FIG. 2(c)

# FIG. 3(a)

# FIG. 3(b)

# FIG. 3(c)

# FIG. 4(a)

# FIG. 4(b)

# FIG. 4(c)

# FIG. 5(a)

# FIG. 5(b)

# FIG. 5(c)

# FIG. 6(a)

# FIG. 6(b)

# FIG. 6(c)

# FIG. 7(a)

# FIG. 7(b)

# FIG. 7(c)

## FIG. 8(a)

## FIG. 8(b)

## FIG. 8(c)

# FIG. 9(a)

Focus

G1 G2 S G3 G4

$r_2$ $r_3$ $r_4$ $r_5$ $r_6$ $r_8$ $r_9$ $r_{17}$ $r_{20}$
$r_1$ $r_7$ $r_{10}$ $r_{11}$ $r_{14}$ $r_{16}$ $r_{19}$ $r_{21}$ $r_{22}$
$r_{12}$ $r_{13}$ $r_{15}$ $r_{18}$ $r_{23}$

I

P

LF CG

# FIG. 9(b)

G1 G2 S G3 G4

$d_3$ $d_6$ $d_{10}$ $d_{11}$ $d_{12}$ $d_{18}$ I
$d_1$ $d_7$ $d_{13}$ $d_{15}$ $d_{17}$ $d_{19}$ $d_{21}$ $d_{22}$
$d_2$ $d_4$ $d_5$ $d_8$ $d_9$ $d_{14}$ $d_{16}$ $d_{20}$

# FIG. 9(c)

G1 G2 S G3 G4

I

FIG. 10

# FIG. 11

# FIG. 12

## FIG. 13

## FIG. 14

C : Cyan   M : Magenta

Ye : Yellow   G : Green

# FIG. 15

# FIG. 16

LF Low-pass filter

Complementary colors mosaic filter

Near-infrared cut coat surface

G3,G4

1B

1A

G1,G2

Optical axis

11 Rotating shaft

1E

1D

1C

CCD

10 Turret

EP 2 226 668 B1

# FIG. 17(a)

Optical axis

1A'

1E'

11 Rotating shaft

1B'

1D'

10' Turret

1C'

# FIG. 17(b)

MTF

1E'

1

1A'

1B'

1C'

1D'

0

Spatial frequency

# FIG. 18

# FIG. 19

# FIG. 20

# FIG. 21

# FIG. 22

# FIG. 23

# FIG. 24

# FIG. 25

# FIG. 26

# FIG. 27

409a(409e)    427

427    423

# FIG. 28

426

426    426

423    409a(409e)

# FIG. 29

45 Shutter

46 Flash

43 Finder optical system

40 Camera

44 Finder optical path

41 Image pickup optical system

42 Phototaking optical path

# FIG. 30

45 Shutter

40 Camera

47 Liquid crystal display monitor

44 Finder optical path

# FIG. 31

53 Finder objective optical system

57 Field frame

55 Porro prism

59 Eyepiece optical system

44 Finder optical path

50 Cover member

E Observer's eyeball

43 Finder optical system

50 Cover member

P

51

Processing means

G1
G2
S

42 Phototaking optical path

41 Phototaking optical system

47 Liquid crystal display monitor

G3
G4
LF

Recording means

49 CCD    52

EP 2 226 668 B1

# FIG. 32

# FIG. 33

# FIG. 34

FIG. 35(a)

FIG. 35(b)

FIG. 35(c)

**EP 2 226 668 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S11194274 A
- JP 11287953 A
- JP 2000009997 A
- EP 0773460 A2